# EUROPEAN PATENT APPLICATION

(11) **EP 4 750 106 A1**
(43) Date of publication of application: **27.05.2026**
(21) Application number: 23945453.1
(22) Date of filing: 19.07.2023
(51) Int. Cl.: H04W 8/24

(54) **WIRELESS COMMUNICATION METHOD AND COMMUNICATION APPARATUS**

(71) Applicant: GUANGDONG OPPO MOBILE TELECOMMUNICATIONS CORP., LTD., Dongguan, Guangdong 523860 (CN)
(72) Inventor: CHEN, Jingran, Dongguan, Guangdong 523860 (CN); WANG, Yaxin, Dongguan, Guangdong 523860 (CN)
(74) Representative: RGTH
(86) International application number: PCT/CN2023/108185
(87) International publication number: WO 2025/015561

(57) **Abstract**

Provided are a wireless communication method and a communication apparatus. The wireless communication method comprises: a first network element transmits a first message to a second network element, the first message being used for requesting the second network element to transmit, to a terminal device, target data generated by the first network element.

## Description

### TECHNICAL FIELD

The present disclosure relates to the field of communication technology, and more particularly, to wireless communication methods and communication apparatuses.

### BACKGROUND

In some communication systems (e.g., new radio (NR) systems), data required by a terminal device may be generated by a network element in a core network. For example, model data required by the terminal device may be generated by the network element in the core network. In this scenario, how to transmit the data generated by the network element in the core network to the terminal device is a problem that needs to be solved.

### SUMMARY

The present disclosure provides wireless communication methods and communication apparatuses. Various aspects related to the present disclosure will be introduced below.

In a first aspect, a wireless communication method is provided, which includes: transmitting, by a first network element, a first message to a second network element, where the first message is used for requesting the second network element to transmit target data generated by the first network element to a terminal device.

In a second aspect, a wireless communication method is provided, which includes: receiving, by a second network element, a first message transmitted by a first network element, where the first message is used for requesting the second network element to transmit target data generated by the first network element to a terminal device.

In a third aspect, a wireless communication method is provided, which includes: transmitting, by a terminal device, a second message to a first network element, where the second message is used for requesting the first network element to transmit target data generated by the first network element.

In a fourth aspect, a communication apparatus is provided. The apparatus is a first network element and the apparatus includes: a first transmitting module, configured to transmit a first message to a second network element, where the first message is used for requesting the second network element to transmit target data generated by the first network element to a terminal device.

In a fifth aspect, a communication apparatus is provided. The apparatus is a second network element and the apparatus includes: a receiving module, configured to receive a first message transmitted by a first network element, where the first message is used for requesting the second network element to transmit the target data generated by the first network element to a terminal device.

In a sixth aspect, a terminal device is provided, which includes: a transmitting module, configured to transmit a second message to a first network element, where the second message is used for requesting the first network element to transmit target data generated by the first network element.

In a seventh aspect, a communication apparatus is provided, which includes a processor, a memory, and a communication interface, where the memory is configured to store one or more computer programs, and the processor is used for call the computer programs in the memory, to enable the communication apparatus to perform part or all of steps in the method of any one of the first aspect to the second aspect.

In an eighth aspect, a terminal device is provided, which includes a processor, a memory, and a communication interface, where the memory is configured to store one or more computer programs, and the processor is used for call the computer programs in the memory, to enable the terminal device to perform part or all of steps in the method of the third aspect.

In a ninth aspect, embodiments of the present disclosure provide a communication system. The system includes the communication apparatus and/or the terminal device described above. In another possible design, the system may further include other devices that interact with the communication apparatus or the terminal device in the solutions provided in the embodiments of the present disclosure.

In a tenth aspect, the embodiments of the present disclosure provide a computer-readable storage medium, where the computer-readable storage medium has stored a computer program, and the computer program enables a computer to perform part or all of steps in the methods of the above aspects.

In an eleventh aspect, the embodiments of the present disclosure provide a computer program product, where the computer program product includes a non-transitory computer-readable storage medium having stored a computer program, and the computer program is operable to enable a computer to perform part or all of steps in the methods of the above aspects. In some implementations, the computer program product may be a software installation package.

In a twelfth aspect, the embodiments of the present disclosure provide a computer program, the computer program is operable to enable a computer to perform part or all of steps in the methods of the above aspects.

In a thirteenth aspect, the embodiments of the present disclosure provide a chip, the chip includes a memory and a processor, where the processor may call a computer program from the memory and run the computer program, to implement part or all of steps described in the methods of the above aspects.

In the embodiments of the present disclosure, the first network element may transmit the data generated by the first network element to the terminal device through the second network element, which is conducive to the second network element transmitting the data to the terminal device through the user plane and improving the rationality of data transmission.

### BRIEF DESCRIPTION OF THE DRAWINGS

FIGS. 1 and 2 are example diagrams of system architectures of wireless communication systems to which embodiments of the present disclosure is applicable.
FIG. 3 is a structural diagram of a neural network applicable to embodiments of the present disclosure.
FIG. 4 is a structural diagram of a convolutional neural network (CNN) applicable to the embodiments of the present disclosure.
FIG. 5 is a schematic flowchart of a wireless communication method provided in an embodiment of the present disclosure.
FIG. 6 is a schematic flowchart of a wireless communication method provided in another embodiment of the present disclosure.
FIG. 7 is a schematic flowchart of a wireless communication method provided in yet another embodiment of the present disclosure.
FIG. 8 is a schematic flowchart of a wireless communication method provided in still yet another embodiment of the present disclosure.
FIG. 9 is a schematic flowchart of a wireless communication method provided in still yet another embodiment of the present disclosure.
FIG. 10 is a schematic structural diagram of a communication apparatus provided in an embodiment of the present disclosure.
FIG. 11 is a schematic structural diagram of a communication apparatus provided in another embodiment of the present disclosure.
FIG. 12 is a schematic diagram of the structure of a terminal device provided in an embodiment of the present disclosure.
FIG. 13 is a schematic structural diagram of a communication apparatus provided in yet another embodiment of the present disclosure.

### DETAILED DESCRIPTION

### Communication system architecture

The technical solutions in the embodiments of the present disclosure may be applied to various communication systems, such as a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, an LTE frequency division duplex (FDD) system, an LTE time division duplex (TDD) system, a new radio (NR) system, an evolution system of the NR system, an LTE-based access to unlicensed spectrum (LTE-U) system, an NR-based access to unlicensed spectrum (NR-U) system, a non-terrestrial networks (NTN) system, a terrestrial networks (TN) system, a universal mobile telecommunication system (UMTS) system, wireless local area networks (WLAN), wireless fidelity (WIFI), and a 5th-generation (5G) communication system. The technical solutions provided in the present disclosure may also be applied to other communication systems, for example, a future communication system, such as a 6th-generation mobile communication system, and a satellite communication system.

Generally speaking, traditional communication systems support a limited number of connections, which is easy to be implemented. However, with the development of the communication technology, mobile communication systems will not only support traditional communication, but also support, for example, device to device (D2D) communication, machine to machine (M2M) communication, machine type communication (MTC), vehicle to vehicle (V2V) communication, or vehicle to everything (V2X) communication, or the like. The embodiments of the present disclosure may be applied to these communication systems as well.

The communication system in the embodiments of the present disclosure may be applied to a carrier aggregation (CA) scenario, a dual connectivity (DC) scenario, and also be applied to a standalone (SA) networking scenario.

The communication system in the embodiments of the present disclosure may be applied to an unlicensed spectrum, where the unlicensed spectrum may also be considered as a shared spectrum; alternatively, the communication system in the embodiments of the present disclosure may also be applied to a licensed spectrum, where the licensed spectrum may also be considered as a dedicated spectrum.

An important feature of a communication system architecture (e.g., a 5G system architecture) is that the communication system architecture may be a service-oriented architecture, that is, network elements (i.e., service providers) in the core network may provide specific services and make them available for invocation by other network elements (i.e., consumers) through defined application programming interfaces (APIs).

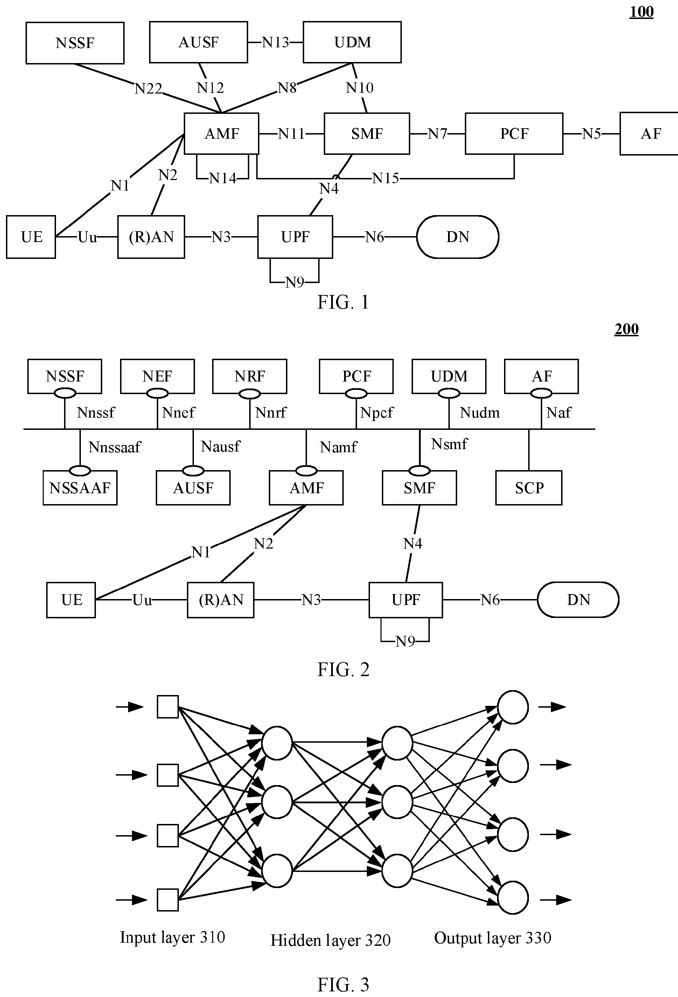

FIG. 1 and FIG. 2 exemplarily illustrate example diagrams of system architectures of wireless communication systems to which the embodiments of the present disclosure are applicable. Taking the communication system as a 5G system architecture as an example, the wireless communication system may include multiple network elements, nodes or devices, such as a terminal device, an access network (AN) device, a user plane function (UPF) network element, an access and mobility management function (AMF) network element, a session management function (SMF) network element, a policy control function (PCF) network element, and an application function (AF) network element. The wireless communication system may further include a data network (DN) and the like.

The functions of various parts or network elements involved in the wireless communication system in the 5G network will be illustratively described below.

Terminal device: the terminal device may also be called a user equipment (UE), an access terminal, a user unit, a user station, a mobile console, a mobile station (MS), a mobile terminal (MT), a remote station, a remote terminal, a mobile device, a user terminal, a terminal, a wireless communication device, a user agent, or a user apparatus. The terminal device in the embodiments of the present disclosure may be a device that provides voice and/or data connectivity to users and may be used for connecting people, objects and machines, such as a handheld device or in-vehicle device with wireless connection functions. The terminal device in the embodiments of the present disclosure may be a mobile phone, a pad, a laptop computer, a palm computer, a mobile internet device (MID), a wearable device, a vehicle device, a virtual reality (VR) device, an augmented reality (AR) device, a wireless terminal in industrial control, a wireless terminal in self driving, a wireless terminal in remote medical surgery, a wireless terminal in a smart grid, a wireless terminal in transportation safety, a wireless terminal in a smart city, a wireless terminal in a smart home, or the like.

Access network device: the access network device may be used for providing network access functions for licensed terminal devices in a specific area, and is capable of using transmission channels of different qualities based on the level of the terminal devices, server requirements, or the like. The access network device is capable of managing wireless resources, to provide access services for the terminal devices, so as to complete forwarding of control signals and data between the terminal devices and the core network.

The access network device may be a device in a wireless network. The access network device may also be referred to as a radio access network (RAN) device or a network device. For example, the access network device may be a base station. The access network device in the embodiments of the present disclosure may refer to a radio access network (RAN) node (or device) that connects the terminal device to the wireless network. The base station may broadly cover various names as follows, or be replaced with following names, such as: node B (NodeB), evolved NodeB (eNB), next generation NodeB (gNB), relay station, access point, transmitting and receiving point (TRP), transmitting point (TP), master station (MeNB), secondary station (SeNB), multistandard radio (MSR) node, home base station, network controller, access node, wireless node, access point (AP), transmission node, transceiver node, base band unit (BBU), remote radio unit (RRU), active antenna unit (AAU), remote radio head (RRH), central unit (CU), distributed unit (DU), positioning node, or the like. The base station may be a macro base station, a micro base station, a relay node, a donor node, or the like, or a combination thereof. The base station may further refer to a communication module, modem or chip designed to be provided within the above device or apparatus. The base station may further be a device that performs base station functions in a mobile switching center, device to device (D2D) communication, vehicle to everything (V2X) communication, or the machine to machine (M2M) communication, a network side device in the 6G network, or a device that performs base station functions in the future communication system. The base station may support networks with the same or different access technologies. The specific technology and specific device form adopted by the access network device will not be limited in the embodiments of the present disclosure.

The base station may be fixed or mobile. For example, a helicopter or a drone may be configured to act as a mobile base station, and one or more cells may move based on the location of the mobile base station. In some other examples, a helicopter or a drone may be configured to function as a device communicating with another base station.

In some deployments, the access network device in the embodiments of the present disclosure may refer to a CU or a DU, or the access network device includes a CU and a DU. The gNB may further include an AAU.

The access network device and the terminal device may be deployed on land, including indoors or outdoors, handheld or in-vehicle; the access network device and the terminal device may further be deployed on the water surface; and the access network device and the terminal device may further be deployed in the air on aircraft, balloons and satellites. The scenarios in which the access network device and the terminal device are located will not be limited in the embodiments of the present disclosure.

UPF network element: the UPF is the user plane function in the core network, which may be responsible for forwarding and receiving the user data (e.g., a server data flow) in the terminal device. The UPF may connect to the access network device (e.g., a base station) and external data networks for data transmission. For example, the UPF may receive user data from the DN and transmit the user data to the terminal device through the access network device; alternatively, the UPF may further receive user data from the terminal device through the access network device and then forward the user data to the DN. The transmission resources and scheduling functions that provide services to terminal devices in the UPF are managed and controlled by the SMF. In some embodiments, UPFs may be divided into an intermediate-UPF (I-UPF) and an anchor-UPF (A-UPF). Here, the I-UPF is connected to the access network, the A-UPF is a UPF of a session anchor point, and the A-UPF may further be called a PDU session anchor (PSA).

AMF network element: the AMF is the mobility management function in the core network, which may be used for implementing other functions of the mobility management entity (MME) except for session management, such as lawful interception or access authorization (or authentication). In some embodiments, in addition to performing the mobility management on terminal devices, the AMF may further be responsible for forwarding related messages of the session management between the terminal devices and the SMF.

SMF network element: the SMF is the session management function in the core network, which is mainly responsible for session management, internet protocol (IP) address allocation and management of terminal devices, selection of endpoints for manageable user plane functions, policy control, or charging function interfaces, downlink data notification, and configuration of routing information for the user plane function.

PCF network element: the PCF is the policy management function in the core network, which may be responsible for formulating policies related to mobility management, session management, billing for the terminal device. Specifically, the PCF may provide policy rule information to functional network elements of the control plane (e.g., the AMF and SMF network elements) to manage and control the mobility management and the session management of the terminal device.

AF network element: the AF mainly supports interaction with the 3rd generation partnership project (3GPP) core network to provide services, such as influencing data routing decisions, policy control functions, or providing some third-party services to the network side. In other words, the AF may be mainly used for conveying the requirements of the application side to the network side. In some embodiments, the AF may be an application within an operator, such as IP multimedia subsystem (IMS) technology. In some embodiments, the AF may be understood as a third-party server, such as an application server on the Internet, which provides relevant service information, including providing quality of service (QoS) requirement information corresponding to the service to the PCF, and transmitting user plane data information of the server to the A-UPF. In some embodiments, the AF may also be a content provider (CP). In some embodiments, in response to the AF being an AF within the operator and is in a trusted domain with other network functions (NFs), the AF may directly interact and access other NFs; in response to the AF being not in the trusted domain, the AF needs to access other NFs through other network elements (e.g., a network exposure function (NEF) network element below).

DN: the DN refers to a network that may be used for providing data transmission. The DN may be a private network, such as a local area network, or an external network not controlled by an operator, such as the Internet, or a dedicated network jointly deployed by operators, such as a network that provides IMS services.

It should be understood that the above network elements in the core network may also be called functional entities, which will not be limited in the present disclosure. For example, the UPF network element may also be referred to as a UPF entity, the AMF network element may also be referred to as an AMF entity, or the like. It should further be understood that in some embodiments, an xx network element or an xx functional entity may also be directly referred to as an xx, for example, the UPF network element (or the UPF entity) may be referred to as the UPF, and the AMF network element (or the AMF entity) may be referred to as the AMF. For the sake of convenience of description, the xx (e.g., the UPF or the AMF) mentioned in the embodiments of the present disclosure may refer to an xx network element or an xx entity, which will not be repeated below.

Optionally, the wireless communication system may further include a unified data management (UDM) network element, an authentication service function (AUSF) network element, a network slice selection function (NSSF) network element, a network exposure function (NEF) network element, a network data analysis function (NWDAF) and other network elements, which will not be limited in the embodiments of the present disclosure.

The UDM network element is a subscription database in the core network, which may be used for generating and storing subscription data of the users in the network (e.g., the 5G network), managing authentication data, and performing other functions. The UDM network element may support interaction with external third-party servers. The AUSF network element may be used for receiving a request of the AMF for an identity authentication of a terminal device, requesting a key from the UDM, and then forwarding the issued key to the AMF for authentication processing. The NSSF network element may be used for network slicing selection. The NEF network element may be responsible for managing the external exposure of the network data from 5G network elements, and external non-trusted applications need to access the internal data of the core network through the NEF to ensure security of the 3GPP network. In some embodiments, the NEF network element may further provide functions such as external application QoS capability exposure, event subscription, and AF request distribution. The NWDAF network element may collect data from various network elements and network management systems in the core network, to perform big data statistics, analysis, or intelligent data analysis in order to obtain analysis results of the network side or prediction data of the network side, so as to assist various network elements to more effectively control terminal devices based on the data analysis results.

In the wireless communication systems illustrated in FIG. 1 and FIG. 2, various parts or network elements may communicate with each other through interfaces. For example, the terminal device may establish an access layer connection with the AN through a Uu interface to exchange access layer messages and wireless data transmission; the terminal device may establish a none access stratum (NAS) layer connection with the AMF through an N1 interface to exchange NAS messages; the AN may establish a connect with the AMF through an N2 interface to transmit radio bearer control information from the core network side to the AN; and the UPF may transmit data with the AN through an N3 interface and transmit data with the DN through an N6 interface, etc. The interfaces connecting other parts or network elements may be found in FIG. 1 and FIG. 2, which will not be specifically repeated here.

It should be understood that the terminal device, the access network device, the SMF, the PCF and other network elements illustrated in FIG. 1 and FIG. 2 are just names, and the name do not limit the device itself. In the 5G network and other future networks, network elements corresponding to the terminal device, the access network device, the SMF, and the PCF may also have other names, which will not be specifically limited in the embodiments of the present disclosure.

It should be understood that the above communication system is illustrated by using the 5G system as an example. Certainly, the present disclosure may also be applied to other 3GPP communication systems, such as a 4G communication system, or a future 3GPP communication system, which will not be limited in the embodiments of the present disclosure.

It should be understood that all or part of the functions of the communication device in the present disclosure may also be implemented through software functions running on hardware, or through virtualization functions instantiated on a platform (e.g., a cloud platform).

It should be understood that the system architecture described in the embodiments of the present disclosure is intended to more clearly illustrate the technical solutions of the embodiments of the present disclosure, and does not constitute a limitation on the technical solutions provided by the embodiments of the present disclosure. Those skilled in the art can see that with the evolution of network architecture, the embodiments of the present disclosure may also be applicable to similar technical problems.

### Neural Network

In recent years, artificial intelligence research represented by neural networks has achieved great results in many fields, and it will play an important role in production and life of people for a long time to come. Common neural networks include a convolutional neural network (CNN), a recurrent neural network (RNN), a deep neural network (DNN), and the like.

A neural network applicable to the embodiments of the present disclosure will be described below in conjunction with FIG. 3. Layers of the neural network illustrated in FIG. 3 may be divided into three types according to the positions of different layers: an input layer 310, a hidden layer (or a hiding layer) 320 and an output layer 330. Generally speaking, the first layer is the input layer 310, the last layer is the output layer 330, and intermediate layers between the first layer and the last layer are all hidden layers 320.

The input layer 310 is used for inputting data, where the input data may be, for example, a received signal received by a receiver. The hidden layer 320 is used for processing the input data, for example, to decompress the received signal. The output layer 330 is used for outputting the processed output data, for example, output a decompressed signal.

As illustrated in FIG. 3, each node illustrated in FIG. 3 represents one processing unit, which may be considered to simulate a neuron, and multiple neurons may form one layer of the neural network. An overall neural network (including a multi-layer neural network) may be constructed through multi-layer information transmission and processing.

The neural network includes multiple layers, each layer includes multiple neurons, and neurons between layers may be fully connected or partially connected. For connected neurons, outputs of neurons in the previous layer may be used as inputs of neurons in a next layer.

With the continuous development of neural network research, neural network deep learning algorithms have been proposed in recent years. More hidden layers are introduced into the neural network to form the DNN. The more hidden layers enable the DNN to better depict complex situations in the real world. Theoretically, the more parameters a model has, the higher its complexity and the greater its "capacity", which means it may complete more complex learning tasks. In addition, multi-hidden layer neural networks may be trained layer by layer to perform feature learning, which may improve learning and processing capabilities of the neural network. Therefore, the neural network model is widely used in pattern recognition, signal processing, optimization combination, anomaly detection and other aspects.

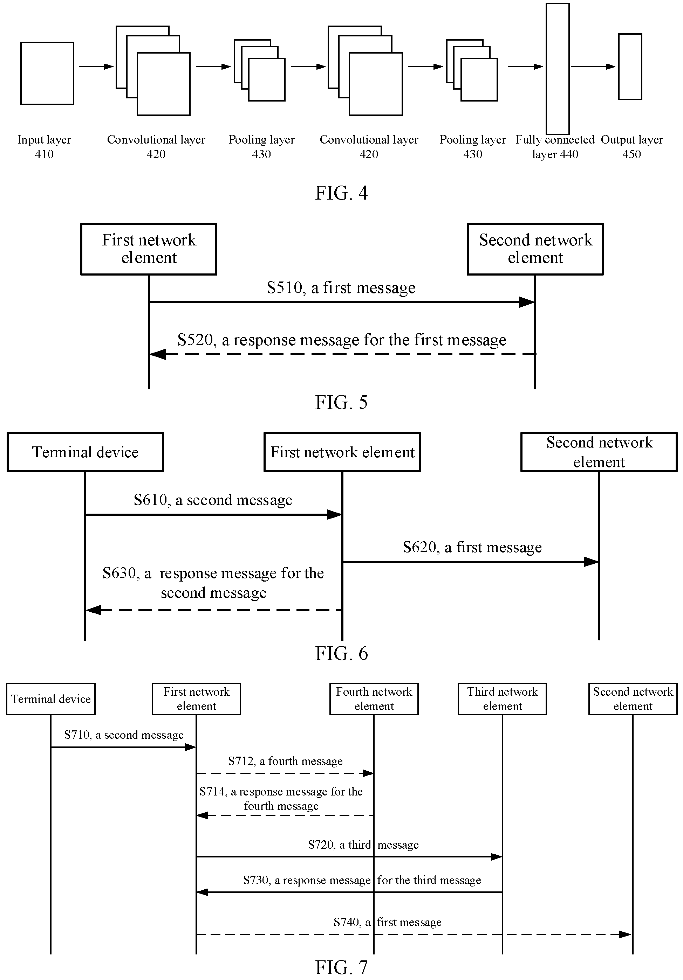

Similarly, with the development of deep learning, the CNN has also been further studied. The CNN is a deep neural network with a convolutional structure, with a structure illustrated in FIG. 4, which may include an input layer 410, a convolutional layer 420, a pooling layer 430, a fully connected layer 440, and an output layer 450.

The CNN may include one or more convolutional layers 420. Each convolutional layer 420 may include multiple convolutional operators, which are also called kernels. The convolutional operator may be regarded as a filter for extracting specific information from an input signal. The convolutional operator may essentially be a weight matrix, which is usually predefined.

Weight values in weight matrices need to be obtained through a lot of training in practical applications. The weight matrices formed by the weight values obtained through training may extract information from the input signal, to help the CNN to make correct predictions.

In a case where the CNN has multiple convolutional layers, an initial convolutional layer tends to extract more general features, which may also be called low-level features; and as the depth of the CNN increases, the features extracted by the subsequent convolutional layers become more and more complex.

The CNN may include one or more pooling layers 430. Since the number of training parameters is often necessary to be reduced, the pooling layer is often necessary to be periodically introduced after the convolutional layer. For example, one convolutional layer may be followed by one pooling layer as illustrated in FIG. 4, or multiple convolutional layers may be followed by one or more pooling layers. In signal processing, the sole purpose of the pooling layer is to reduce a spatial size of extracted information.

The introduction of the convolutional layer 420 and the pooling layer 430 may effectively control the sharp increase of network parameters, limit the number of the parameters and mine the features of local structures, so as to improve robustness of the algorithm.

After signal processing through the convolutional layer 420 and the pooling layer 430, the CNN is still not sufficient to output required output information. As mentioned above, the convolutional layer 420 and the pooling layer 430 only extract features and reduce the parameters brought by the input data. However, in order to generate the final output information (e.g., a bitstream of the original information transmitted by a transmitter), the CNN further needs to utilize the fully connected layer 440. Typically, the fully connected layer 440 may include multiple hidden layers, and parameters included in the multiple hidden layers may be pre-trained and obtained based on relevant training data of a specific task type. For example, the task type may include decoding a data signal received by a receiver. As another example, the task type may further include channel estimation based on a pilot signal received by the receiver.

After the multiple hidden layers in the fully connected layer 440, the last layer of the entire CNN is the output layer 450, which is used for outputting results. Typically, the output layer 450 is provided with a loss function (e.g., a loss function similar to categorical cross entropy) for calculating a prediction error, or for evaluating the degree of difference between a result (also known as a predicted value) output by the CNN model and an ideal result (also known as a true value).

In order to minimize the loss function, the CNN model needs to be trained. In some implementations, a backpropagation algorithm (BP) may be used for training the CNN model. The BP training process consists of a forward propagation process and a backpropagation process. During the forward propagation process (e.g., a propagation from the layers 410 to 450 in FIG. 4 is the forward propagation), the input data is input into the above layers of the CNN model, processed layer by layer and transmitted to the output layer. In response to the result outputted at the output layer being significantly different from the ideal result, the above loss function is minimized as an optimization goal, and the backpropagation is started (e.g., a propagation from the layers 450 to 410 in FIG. 4 is the backpropagation). A partial derivative of the optimization goal with respect to a weight of each neuron is obtained layer by layer to form a gradient of the optimization goal with respect to the weight vector, which serves as the basis for modifying the model weights. The training process of the CNN is completed during the weight modification process. In a case where the above error reaches the expected value, the CNN training process ends.

It will be noted that the CNN illustrated in FIG. 4 is only an example of a convolutional neural network. In specific applications, the convolutional neural network may also exist in forms of other network models, which will not be limited in the embodiments of the present disclosure.

### Artificial intelligence (AI) and Wireless communication

Compared with previous wireless communication systems, current or future wireless communication systems are capable of providing greater flexibility, which emphasizes wide applicability to different scenarios and full utilization of limited resources. However, basic principles of current wireless communication systems are mostly still based on theoretical modeling of actual communication environments or simple parameter selection. The benefits that the basic working method may bring are gradually weakening in changing scenarios and complex communication environments. In view of this situation, a new method and idea need to be introduced to further improve the performance of the wireless communication system. For example, the new method and idea may be conjunction with traditional wireless communication theories and systems to break the performance bottleneck of wireless communication systems.

As an implementation, 3GPP is considering researching AI/machine learning (ML)-enabled wireless air interface technologies. The following examples illustrate several research use cases related to the AI/ML-enabled wireless air interface technology.

As an example, the wireless communication system may rely on the AI to solve the channel state information (CSI) feedback problem. For example, an AI encoder (also known as a CSI compression model) and an AI decoder (also known as a CSI recovery model) may be introduced into the wireless communication system to utilize the AI/ML technology to compress and decompress CSI information, reduce air interface transmission overhead, and improve the accuracy of the CSI feedback information.

As another example, the wireless communication system may rely on the AI to solve channel estimation problems. For example, an AI channel estimator may be introduced in the wireless communication system to implement high-performance estimation of a given channel.

As yet another example, the wireless communication systems may rely on the AI to solve positioning problems. For example, an AI-based positioning algorithm may be introduced into the wireless communication system. By inputting positioning channel information into the AI-based positioning algorithm, high-precision positioning results may be obtained. That is, in the wireless communication system, the AI/ML technology may be used for predicting the location information of the terminal device and improve the accuracy of the location information of the terminal device (e.g., location information of the terminal device in a non-line-of sight (NLOS) scenario).

As still yet another example, the wireless communication system may rely on the AI to solve beam management problems. For example, an AI-based beam management algorithm may be introduced into the wireless communication system. Combined with known beam information, preferred or more refined beam information may be obtained, or prediction results of beam information at future times may be obtained. That is, in the wireless communication system, the AI/ML technology may be used for predicting beam information in the time domain/spatial domain, to reduce measurement overhead and latency and improve the accuracy of beam selection.

Based on the above research, 3GPP has further studied lifecycle management of the AI model, including model generation, model deployment, model transmission, model monitoring, model update and other aspects. As an implementation, the AI model may be generated by the core network or a third-party server. For example, the AI model running on the terminal device side may be generated by the core network or a third-party server. In this case, the core network or the third-party server needs to monitor the operating effect of the model on the terminal device side in real time, so as to update the model in time to ensure the efficient operation of the communication system.

As mentioned above, in current communication systems, data is transmitted between the terminal device and the DN through the user plane (e.g., the UPF). That is, the terminal device may transmit uplink data to the server in the DN through the access network device and the UPF, or the server in the DN may transmit downlink data to the terminal device through the UPF and the access network device. However, in some scenarios, data required by the terminal device may be generated by the network element in the core network. For example, model data required by the terminal device (e.g., AI/ML model data) may be generated by the network element in the core network. In this case, how to transmit the data generated by the network element in the core network to the terminal device is a problem that needs to be solved. For example, in a case where the amount of data generated by the network element in the core network is large (e.g., the amount of data of the AI model is large), how should the data generated by the network element in the core network be transmitted to the terminal device.

In response to the above problem, the embodiments of the present disclosure provide wireless communication methods and communication apparatuses. After a first network element generates target data, the target data may be transmitted to a terminal device through a second network element. The second network element may transmit the target data to the terminal device through, for example, a user plane, which is conducive to improving the rationality of data transmission.

To facilitate understanding, the first network element and the second network element will be introduced first below.

In the embodiments of the present disclosure, the first network element is a network element that generates the target data (e.g., model data). In some embodiments, the first network element is a network element in a core network. That is, the first network element may be a network element in the core network capable of generating the target data.

Several possible implementation forms of the first network element will be introduced below as examples.

In some embodiments, the first network element may be a network element in the core network used for performing data statistics and data analysis. Taking the NR system as an example, the first network element may be an NWDAF network element in the core network. It can be understood that the first network element may also be another network element, node or device used for performing the data statistics and the data analysis, such as a network element or node used for performing the data statistics and data analysis in the future communication system, which will not be limited in the embodiments of the present disclosure.

In some embodiments, the first network element may be a network element in the core network used for determining location information of the terminal device, for example, the first network element may be a positioning server in the core network. Taking the NR system as an example, the first network element may be a location management function (LMF) in the core network. Taking other communication systems as an example, the first network element may be a location management unit (LMU), a location management center (LMC) or an evolved serving mobile location center (E-SMLC). It can be understood that the first network element may also be another network element, node or device used for determining the location information of the terminal device, such as a network element or node used for determining the location information of the terminal device in the future communication system, which will not be limited in the embodiments.

In some embodiments, the first network element may also be another network element in the core network that is related to determining the location information of the terminal device, or in other words, the first network element may also be another network element in the core network that is related to a location service. For example, the first network element may be a gateway mobile location center (GMLC).

In the embodiments of the present disclosure, the second network element is a network element that transmits the target data generated by the first network element to the terminal device. In some embodiments, the second network element may be a network element in the core network.

In some embodiments, the second network element may be a network element related to the user plane in the core network. In other words, the second network element may transmit the target data generated by the first network element to the terminal device through the user plane.

The second network element will not be limited in the embodiments of the present disclosure, as long as the second network element is a network element related to the user plane in the core network, or as long as the second network element is capable of transmitting the target data generated by the first network element to the terminal device through the user plane. Taking the NR system as an example, the second network element may be the UPF in the core network. It can be understood that the second network element may also be another network element, node or device used for transmitting data to the terminal device through the user plane. For example, the second network element may be a network element or node in the future communication system used for transmitting data to the terminal device through the user plane, which will not be limited in the embodiments.

Multiple application scenarios may be included in the embodiments of the present disclosure, which will not be limited in the embodiments of the present disclosure. Exemplarily, the embodiments of the present disclosure may be applicable to any scenario in which a network element (e.g., the first network element) in the core network needs to transmit data to the terminal device through the user plane. For example, the embodiments of the present disclosure are applicable to a scenario in which the first network element generates the model data (e.g., AI model data) and intends to transmit the model data to the terminal device through the user plane.

In some embodiments, the embodiments of the present disclosure may be applicable to a scenario in which the data volume of the target data generated by the first network element is large. In a case where the data volume of the target data is large, it is more reasonable to transmit the target data to the terminal device through the user plane. For example, the target data generated by the first network element is the model data (e.g., the AI model data), and the data volume of the model data is generally large. In this case, the model data may be transmitted to the terminal device through the user plane. However, the embodiments of the present disclosure are not limited to the above, and the embodiments of the present disclosure may also be applicable to a case where the data volume of the target data generated by the first network element is small.

In the embodiments of the present disclosure, in a case where the first network element needs to transmit the target data generated by the first network element to the terminal device through the second network element, for example, in a case where the first network element requests the second network element to transmit the target data to the terminal device through the user plane, the first network element first needs to transmit the target data to the second network element, and then the second network element transmits the target data to the terminal device through the user plane. Therefore, the communication system needs to be improved to support a service in which the first network element transmits the target data to the second network element, and the second network element then transmits the target data to the terminal device through the user plane.

In response to the problem, a new service may be added to the second network element in the embodiments of the present disclosure, to support transmission of target data. That is, a new service may be added to the second network element in the embodiments of the present disclosure, to support the first network element to transmit the target data to the second network element, and support the second network element to subsequently transmit the target data to the terminal device through the user plane. The new service added to the second network element will be introduced below.

In the embodiments of the present disclosure, the new service added to the second network element is mainly to ensure that the second network element (e.g., the UPF) may transmit the target data generated by the first network element (e.g., the NWDAF) to the terminal device through the user plane. Taking the target data as the model data as an example, the service is mainly to ensure that the second network element may transmit the model data to the terminal device through the user plane.

The name of the service will not be specifically limited in the embodiments of the present disclosure. Exemplarily, taking the target data as the model data as an example, the service may be understood as or referred to as a model transmission service.

The implementation of the service will not be specifically limited in the embodiments of the present disclosure. For example, the service may be implemented in an event subscription manner, that is, the second network element supports the first network element to transmit the target data in the manner of event subscription. Alternatively, the service may be implemented in a function subscription manner, that is, the second network element supports the first network element to transmit the target data in the manner of function subscription. Two implementations will be described below as examples.

### Implementation 1: an event-based manner

In this implementation, an event may be defined on the second network element side, and the event is capable of providing a service of transmitting the target data to the terminal device through the user plane. Taking the second network element as the UPF as an example, an event may be defined for the UPF, so that after the first network element subscribes to the event, the UPF may transmit the target data to the terminal device through the user plane. Table 1 shows an example of the event defined on the second network element side.

**Table 1**

| Service Name | Service Operation | Consumer Example |
|---|---|---|
| Nupf_EventExposure | Subscription/Notification | First Network Element |
| | Request/Response | |

In some embodiments, a network element (e.g., a consumer) capable of subscribing to the event includes the first network element, that is, a network element that generates the target data. For example, the network element capable of subscribing to the event may include only the first network element, and other network elements, nodes or devices cannot subscribe to the event.

In some embodiments, the first network element and the second network element may adopt an event subscription-event notification mode to implement the subscription of the first network element to the event. That is, the first network element may initiate a subscription to the second network element, and after the subscription, the second network element may notify the first network element of the subscription information. In some embodiments, the first network element and the second network element may adopt a request-response mode to implement the subscription of the first network element to the event. That is, the first network element may initiate a request to the second network element to subscribe to the event. After receiving the request from the first network element, the second network element may initiate a response to the first network element to notify the first network element of the information of the event to which it has subscribed.

The content of information included in a subscription message in a case where the first network element subscribes to the event will not be specifically limited in the embodiments of the present disclosure. Exemplarily, the subscription message may include one or more pieces of the following information: an event identifier (event ID) associated with transmission of target data, an identifier of the terminal device (UE ID), an identifier of a PDU session used for transmitting the target data, an identifier associated with the target data, or the target data.

The event identifier associated with the transmission of the target data may be used for indicating an event to which the first network element intends to subscribe. For example, the event identifier may be an event ID corresponding to a new event defined in Implementation 1. After receiving the event identifier, the second network element may transmit the target data to the terminal device according to the subscription of the first network element.

The identifier of the terminal device may be used for indicating the target terminal device that receives the target data. The second network element may transmit the target data to the terminal device corresponding to the identifier of the terminal device. In some embodiments, the identifier of the terminal device may be an identifier of a single terminal device. In some embodiments, the identifier of the terminal device may be an identifier of multiple terminal devices (e.g., a group of terminal devices).

The identifier of the PDU session used for transmitting the target data may be used for indicating on which PDU session or PDU sessions the target data is capable of being transmitted. In this way, the second network element may select one or more of the PDU sessions to transmit the target data to the terminal device. In the embodiments of the present disclosure, there may be one or more identifiers of the PDU session used for transmitting the target data, which will not be limited in the present disclosure.

The identifier associated with the target data may be used for indicating information related to the target data, such as a type of the target data, an identifier of a service associated with the target data. As an example, the identifier associated with the target data may be used for indicating the type of the target data. For example, the identifier is used for indicating that the target data is the model data (e.g., the AI model data).

As another example, the identifier associated with the target data may be used for indicating an identifier of a service associated with the target data. The identifier of the service associated with the target data may be used for indicating a specific service associated with the target data. Taking the service associated with the target data as a model (e.g., model transmission) as an example, the identifier of the service associated with the target data may be indicated by using the model ID, to enable the second network element to know which model corresponds to data that needs to be transmitted. That is, the identifier associated with the target data may include a model ID to indicate that the second network element needs to transmit the model data corresponding to the model ID.

As yet another example, the identifier associated with the target data may be used for indicating a type of the target data and an identifier of a service associated with the target data. For example, the identifier associated with the target data may include information indicating that the target data is model data and include the model ID.

In some embodiments, the subscription message may include part of the above information. For example, the subscription message may include the event identifier associated with the transmission of the target data, the identifier of the terminal device, the identifier associated with the target data, and the target data. Alternatively, the subscription message may include the event identifier associated with the transmission of the target data, the identifier of the terminal device, and the target data.

In some embodiments, the subscription message may include all of the above information. For example, the subscription message may include the event identifier associated with the transmission of the target data, the identifier of the terminal device, the identifier of the PDU session used for transmitting the target data, the identifier associated with the target data, and the target data.

In some embodiments, after the first network element subscribes to the event, the second network element may transmit an event notification message to the first network element. In some embodiments, the event notification message may be used for indicating the transmission status of the target data. For example, the event notification message may be used for indicating whether the target data has been transmitted to the terminal device. As an implementation, in response to the target data having been transmitted to the terminal device, the second network element may transmit the event notification message to the first network element to indicate that the target data has been successfully transmitted to the terminal device. As another implementation, in response to the second network element failing to transmit the target data to the terminal device, the second network element may transmit the event notification message to the first network element to indicate a failed transmission of the target data.

The content of the information included in the event notification message returned by the second network element to the first network element will not be specifically limited in the embodiments of the present disclosure. Exemplarily, the event notification message may include one or more pieces of the following information: an identifier of the terminal device, an event identifier associated with transmission of the target data, an identifier of a PDU session used for transmitting the target data, an identifier associated with the target data, or information indicating whether the target data is successfully transmitted.

As an example, the event notification message may include part of the above information. For example, the event notification message may include the identifier of the terminal device, the event identifier associated with the transmission of the target data, the identifier associated with the target data, and the information indicating whether the target data is successfully transmitted (e.g., information indicating successful transmission of the target data).

As another example, the event notification message may include all of the above information. For example, the event notification message may include the identifier of the terminal device, the event identifier associated with the transmission of the target data, the identifier of the PDU session used for transmitting the target data, the identifier associated with the target data, and the information indicating whether the target data is successfully transmitted (e.g., the information indicating the successful transmission of the target data).

It should be understood that in current communication systems, capabilities or services supported by the second network element (e.g., the UPF) are all implemented in an event-based manner. Therefore, the manner of Implementation 1 makes little change to the communication systems and is simpler and easier to be implemented.

### Implementation 2: a function-based manner

In this implementation, a function may be defined on the second network element side, and the function is capable of implementing a service of transmitting the target data to the terminal device through the user plane. Taking the second network element as the UPF as an example, a new function may be defined for the UPF, so that after the first network element subscribes to the function, the UPF may transmit the target data to the terminal device through the user plane. In other words, in Implementation 2, it may be considered that the second network element supporting the service is a function of the second network element. Taking the service as a model transmission service as an example, the second network element supporting the model transmission service is a function of the second network element. Table 2 shows an example of the function defined on the second network element side.

**Table 2**

| Service Name | Service Operation | Consumer Example |
|---|---|---|
| Nupf_UEModelTransfer/Delivery | Subscription/Notification | First Network Element |
| | Request/Response | |

As shown in Table 2, in some embodiments, a service form of the second network element may be to provide Nupf_UEModelTransfer/Delivery service.

In some embodiments, a network element (e.g., a consumer) capable of subscribing to the function includes a first network element, that is, a network element that generates target data. For example, the network elements capable of subscribing to the function may include only the first network element, and other network elements, nodes or devices cannot subscribe to the function.

In some embodiments, the first network element and the second network element may adopt a function subscription-function notification mode to implement the subscription of the first network element to the function. That is, the first network element may initiate a subscription to the second network element, and after the subscription, the second network element may notify the first network element of the subscription information. In some embodiments, the first network element and the second network element may adopt a request-response mode to implement the subscription of the first network element to the function. That is, the first network element may initiate a request to the second network element to request to subscribe to the function. After receiving the request from the first network element, the second network element may initiate a response to the first network element to notify the first network element of the information of the function to which it has subscribed.

The content of the information included in a subscription message in a case where the first network element subscribes to the function will not be limited in the embodiments of the present disclosure. Exemplarily, the subscription message may include one or more pieces of the following information: an identifier of the terminal device (UE ID), an identifier of a PDU session used for transmitting the target data, an identifier associated with the target data, or the target data. The introduction to the various information included in the subscription message may be referred to the previous introduction, which will not be repeated here for the sake of brevity.

As an example, the subscription message may include part of the above information. For example, the subscription message may include the identifier of the terminal device, the identifier associated with the target data, and the target data. Alternatively, the subscription message may include the identifier of the terminal device and target data, and the like.

As another example, the subscription message may include all of the above information. For example, the subscription message may include the identifier of the terminal device, the identifier of the PDU session used for transmitting the target data, the identifier associated with the target data, and the target data.

In some embodiments, after the first network element subscribes to the function, the second network element may transmit a function notification message to the first network element. In some embodiments, the function notification message may be used for indicating the transmission status of the target data. For example, the function notification message may be used for indicating whether the target data has been transmitted to the terminal device. As an implementation manner, in response to the target data having been transmitted to the terminal device, the second network element may transmit the function notification message to the first network element to indicate that the target data has been successfully transmitted to the terminal device. As another implementation, in response to the second network element failing to transmit the target data to the terminal device, the second network element may transmit the function notification message to the first network element to indicate a failed transmission of the target data.

The content of the information included in the function notification message returned by the second network element to the first network element will not be specifically limited in the embodiments of the present disclosure. Exemplarily, the function notification message may include one or more pieces of the following information: an identifier of the terminal device, an identifier of a PDU session used for transmitting the target data, an identifier associated with the target data, or information indicating whether the target data is transmitted successfully.

As an example, the function notification message may include part of the above information. For example, the function notification message may include the identifier of the terminal device, the identifier associated with the target data, and the information indicating whether the target data is successfully transmitted (e.g., the information indicating the successful transmission of the target data).

As another example, the function notification message may include all of the above information. For example, the function notification message may include the identifier of the terminal device, the identifier of the PDU session used for transmitting the target data, the identifier associated with the target data, and the information indicating whether the target data is transmitted successfully (e.g., the information indicating the successful transmission of the target data).

Compared with Implementation 1, Implementation 2 may have a greater impact on the implementation logic of the second network element itself and make greater changes to the communication system.

Based on the above introduction, method embodiments of the present disclosure will be introduced below with reference to the accompanying drawings. FIG. 5 is a schematic flowchart of a wireless communication method provided in an embodiment of the present disclosure. The method illustrated in FIG. 5 is introduced from a perspective of interaction between the first network element and the second network element. The method illustrated in FIG. 5 may include step S510, which will be introduced below.

In step S510, the first network element transmits a first message to a second network element. The first message is used for requesting the second network element to transmit target data generated by the first network element to a terminal device.

A type of the target data will not be limited in the embodiments of the present disclosure. For example, in some embodiments, the target data may include certain specific types of data or data related to a certain specific service. For example, the target data may include model data (e.g., AI model data, or ML model data). However, the embodiments of the present disclosure are not limited to the above. For example, the target data may be any data that needs to be transmitted by the second network element to the terminal device through the user plane, such as any data other than the model data.

In some embodiments, the target data may include certain data with a large data volume. For example, the target data may include model data or other data with a large data volume. However, the embodiments of the present disclosure are not limited to the above. For example, the target data may be data with a small data volume, such as certain model data or other data with a small data volume.

In some embodiments, the target data may include data corresponding to an identifier associated with the target data. For example, in response to the identifier associated with the target data being a model ID, the target data may include model data associated with the model ID.

In some embodiments, the second network element may transmit the target data to the terminal device through the user plane, to improve the rationality of data transmission.

In some embodiments, the first message may be understood or referred to as a subscription message, which is used for subscribing to a service of the second network element. As an implementation, the first message may be used for subscribing to an event defined on the second network element side, so as to request the second network element to transmit the target data to the terminal device in an event subscription manner. As another implementation, the first message may be used for subscribing to a function defined on the second network element side, so as to request the second network element to transmit target data to the terminal device in a function subscription manner. The relevant introduction about the first network element requesting the second network element to transmit the target data to the terminal device in the event subscription manner and/or the function subscription manner may be referred to the previous contents, which will not be repeated here for the sake of brevity.

Taking the target data as the model data as an example, the first network element may request to subscribe to the model transmission service of the second network element, for example, the model transmission service of the second network element is subscribed in the event subscription manner and/or the function subscription manner.

The information included in the first message will not be specifically limited in the embodiments of the present disclosure. Exemplarily, the first message may include one or more pieces of the following information: an event identifier associated with transmission of target data, an identifier of the terminal device, an identifier of a PDU session used for transmitting the target data, an identifier associated with the target data, or the target data. The relevant introduction of each piece of information included in the first message may be referred to the previous contents, which will not be repeated here for the sake of brevity.

As an example, in response to the second network element supporting the first network element to transmit the target data in the event subscription manner, or in response to the second network element supporting the first network element to request the second network element to transmit target data to the terminal device in the event subscription manner, the first message may include one or more pieces of the following information: the event identifier associated with transmission of the target data, the identifier of the terminal device, the identifier of the PDU session used for transmitting the target data, the identifier associated with the target data, or the target data.

As another example, in response to the second network element supporting the first network element to transmit the target data in the function subscription manner, or in response to the second network element supporting the first network element to request the second network element to transmit target data to the terminal device in the function subscription manner, the first message may include one or more pieces of the following information: the identifier of the terminal device, the identifier of the PDU session used for transmitting the target data, the identifier associated with the target data, or the target data.

In some embodiments, after receiving the first message, the second network element may transmit the target data to the terminal device through the user plane based on the first message.

In some embodiments, the second network element may bind the target data to one or more PDU sessions, to transmit the target data to the terminal device through the one or more PDU sessions. For example, the second network element may bind the target data to one or more PDU sessions between the second network element and the terminal device.

In some embodiments, the one or more PDU sessions used by the second network element to transmit target data are determined based on the identifier of the PDU session used for transmitting the target data carried in the first message, or in other words, the PDU session to which the second network element binds the target data is determined based on the identifier of the PDU session carried in the first message. How the second network element determines the implementation of the PDU session for transmitting target data based on the identifier of the PDU session carried in the first message will not be specifically limited in the embodiments of the present disclosure. For example, the second network element may randomly select an identifier of a PDU session used for transmitting the target data from identifiers of the PDU sessions carried in the first message. Alternatively, the second network element may select a PDU session corresponding to an identifier of a PDU session with a relatively small cache size from identifiers of the PDU sessions carried in the first message, to transmit the target data.

In some embodiments, after receiving the first message, the second network element may feed back a response message for the first network element. Continuing to refer to FIG. 5, in some embodiments, the method illustrated in FIG. 5 may further include step S520. In step S520, the second network element transmits the response message for the first message to the first network element.

In some embodiments, the response message for the first message may be used for indicating the transmission status of the target data. For example, the response message for the first message may be used for indicating whether the target data has been transmitted to the terminal device. As an implementation, in response to the target data having been transmitted to the terminal device, the response message for the first message may include information indicating the successful transmission of the target data. As another implementation manner, in response to the failed transmission of the target data, the response message for the first message may include information indicating a failed transmission of the target data.

In some embodiments, in response to the failed transmission of the target data, the information indicating the failed transmission of the target data may be omitted from the response message for the first message. In other words, in response to the failed transmission of the target data, the second network element may not feed back the response message for the first message to the first network element. For example, the second network element may retransmit the target data until the target data is successfully transmitted.

In some embodiments, in response to the successful transmission of the target data, the information indicating the successful transmission of the target data may be omitted from the response message for the first message. As an implementation, in response to the successful transmission of the target data, the response message for the first message may carry other information (e.g., an identifier of the terminal device) to indicate that the target data has been transmitted to the terminal device.

The information included in the response message for the first message will not be limited in the embodiments of the present disclosure. Exemplarily, the response message for the first message may include one or more pieces of the following information: an identifier of the terminal device, an event identifier associated with transmission of the target data, an identifier of a PDU session used for transmitting the target data, an identifier associated with the target data, or information indicating whether the target data has been transmitted to the terminal device (e.g., information indicating the successful transmission of the target data).

As an example, in response to the second network element supporting the first network element to transmit target data in the event subscription manner, the response message for the first message may include one or more pieces of the following information: the identifier of the terminal device, the event identifier associated with the transmission of the target data, the identifier of the PDU session used for transmitting the target data, the identifier associated with the target data, or the information indicating whether the target data has been transmitted to the terminal device (e.g., the information indicating the successful transmission of the target data).

As another example, in response to the second network element supporting the first network element to transmit target data in the function subscription manner, the response message for the first message may include one or more pieces of the following information: the identifier of the terminal device, the identifier of the PDU session used for transmitting the target data, the identifier associated with the target data, or the information indicating whether the target data has been transmitted to the terminal device (e.g., the information indicating the successful transmission of the target data).

In some embodiments, the response message for the first message is transmitted by the second network element to the first network element after transmitting the target data.

In some embodiments, the transmission of the first message by the first network element to the second network element is triggered based on a request of the terminal device, which will be introduced below with reference to FIG. 6.

FIG. 6 is a schematic flowchart of a wireless communication method provided in another embodiment of the present disclosure. The method illustrated in FIG. 6 is introduced from a perspective of interaction between the first network element, the second network element and the terminal device. The method illustrated in FIG. 6 may include step S610 and step S620.

In step S610, the terminal device transmits a second message to the first network element. The second message is used for requesting transmission of target data.

Taking the target data as the model data as an example, in a case where the terminal device intends to perform an operation based on a model (e.g., an AI model/an ML model), the terminal device may request the model data from the first network element. The model-based operation performed by the terminal device will not be limited in the embodiments of the present disclosure. For example, the operation may include one or more of the following operations: AI-based CSI feedback, AI-based beam management, AI-based positioning, or the like.

It should be understood that the type of target data will not be specifically limited in the embodiments of the present disclosure. The target data may be the model data mentioned above, or may be another type of data generated by the first network element, such as positioning data, communication-related data, or analysis statistical data.

The information included in the second message will not be specifically limited in the embodiments of the present disclosure. Exemplarily, the second message may include one or more of the following: an identifier associated with the target data (e.g., a model ID), or an identifier of the terminal device.

In some embodiments, the identifier associated with the target data included in the second message may be used for indicating a service (e.g., a model) that the terminal device intends to request or use. Taking the model ID included in the second message as an example, the model ID is used for indicating that the terminal device intends to use a model corresponding to the model ID.

In step S620, the first network element transmits a first message to the second network element. The first message is used for requesting the second network element to transmit the target data to the terminal device.

The relevant introduction of step S620 may be referred to the description of step S510 above, which will not be repeated here for the sake of brevity.

In some embodiments, the method illustrated in FIG. 6 may further include step S630. In step S630, the first network element transmits a response message for the second message to the terminal device.

In some embodiments, the first network element may transmit the response message for the second message to the terminal device after the target data is transmitted to the terminal device. In other words, the first network element may transmit the response message for the second message to the terminal device after receiving the response message for the first message transmitted by the second network element.

In some embodiments, the response message for the second message may be used for indicating the transmission status of the target data. For example, the response message for the second message may include information on whether the target data is transmitted to the terminal device.

The information included in the response message for the second message will not be specifically limited in the embodiments of the present disclosure. Exemplarily, the response message for the second message may include one or more pieces of the following information: the identifier associated with the target data, the identifier of the terminal device, or the information indicating whether the target data is transmitted to the terminal device (e.g., the information indicating the successful transmission of the target data).

In some embodiments, before requesting the second network element to transmit target data to the terminal device, the first network element needs to first determine the second network element for transmitting the target data, which will be introduced below with reference to FIG. 7.

FIG. 7 is a schematic flowchart of a wireless communication method provided in yet another embodiment of the present disclosure. The method illustrated in FIG. 7 is introduced from a perspective of interaction between multiple network elements or devices. The method illustrated in FIG. 7 may include steps S710 to S730, which will be introduced below.

In step S710, the terminal device transmits a second message to the first network element. The second message is used for requesting transmission of target data.

The introduction of step S710 may be referred to the introduction of step S610 above, which will not be repeated here for the sake of brevity.

In step S720, the first network element transmits a third message to the third network element. The third message is used for determining the second network element.

The third network element will not be limited in the embodiments of the present disclosure, as long as the third network element may determine the second network element that services the terminal device. For example, the third network element may determine a second network element that currently services the terminal device. In some embodiments, the third network element may be a network element in the core network. Exemplarily, the third network element may be a network element, node or device that performs a session management function. Taking the NR system as an example, the third network element may be an SMF. However, the embodiments of the present disclosure are not limited to the above. The third network element may also be another network element used for performing a session management function. For example, the third network element may be a network element for performing a session management function in the future communication system.

In some embodiments, the third message being used for determining the second network element means that the third message is used for determining an internet protocol (IP) address of the second network element. In some embodiments, the third message being used for determining the second network element may mean that the third message is used for determining a network element ID of the second network element.

The information included in the third message will not be specifically limited in the embodiments of the present disclosure. Exemplarily, the third message may include one or more pieces of the following information: an identifier of the terminal device, identifiers of one or more PDU sessions corresponding to the terminal device, or information indicating transmission of the target data.

In some embodiments, the identifier of the terminal device included in the third message and/or the identifiers of the one or more PDU sessions corresponding to the terminal device may be used by the third network element to determine the second network element that serves the terminal device. For example, the third network element may determine which second network elements are capable of serving the terminal device based on the identifier of the terminal device; alternatively, the third network element may determine which PDU sessions the second network element and the terminal device are capable of being used for transmitting the target data based on the identifiers of the one or more PDU sessions corresponding to the terminal device, so as to further select a second network element capable of serving the terminal device based on the identifiers of the PDU sessions.

In some embodiments, the information indicating the transmission of the target data carried in the third message may be used by the third network element to determine a second network element capable of transmitting the target data. As an implementation manner, the information indicating the transmission of the target data may be used for indicating a target service that the first network element intends to transmit (i.e., a service associated with the target data). For example, in response to the first network element intending to perform a model transmission service (or in other words, the first network element intends to transmit model data), the information indicating the transmission of the target data may be indication information of the model transmission service, to enable the third network element to know that the first network element intends to perform the model transmission service. In this way, the third network element may determine which second network elements are capable of performing the model data transmission service, and feed back relevant information of the second network elements to the first network element.

As an example, the third message may include part of the above information. For example, the third message may include the identifier of the terminal device and information on the transmission of the target data.

As another example, the third message may include all of the above information. For example, the third message may include the identifier of the terminal device, the identifiers of the one or more PDU sessions corresponding to the terminal device, and the information indicating the transmission of the target data.

In step S730, the third network element transmits a response message for the third message to the first network element.

In the embodiments of the present disclosure, the third network element may feed back different response messages for the third message to the first network element according to different situations, which will be introduced exemplarily below.

In some embodiments, in a case where the third network element is capable of determining the second network element for transmitting the target data, the third network element may transmit a first response message for the third message to the first network element.

In some embodiments, the first response message for the third message may be used for indicating the relevant information of the determined second network element. Exemplarily, the first response message for the third message may include one or more pieces of the following information: an internet protocol (IP) address of the second network element, a network element ID of the second network element, an identifier of a PDU session corresponding to the second network element in one or more PDU sessions corresponding to the terminal device, or information indicating transmission of the target data.

In some embodiments, the IP address of the second network element and/or the network element ID of the second network element are used for indicating the second network element determined by the third network element.

In some embodiments, the identifier of the PDU session corresponding to the second network element in the one or more PDU sessions corresponding to the terminal device may be used for indicating which PDU sessions the second network element may subsequently use to transmit the target data to the terminal device.

In some embodiments, the information indicating the transmission of the target data may be used for indicating that the second network element determined by the third network element is capable of supporting the target service (e.g., model transmission) that the first network element intends to transmit, or in other words, the information indicating the transmission of the target data may be used for indicating that the second network element determined by the third network element is capable of transmitting the target data.

As an example, the first response message for the third message may include part of the above information. For example, the first response message may include the IP address of the second network element and the information indicating the transmission of the target data. Alternatively, the first response message may include the network element ID of the second network element, the identifier of the PDU session corresponding to the second network element in the one or more PDU sessions corresponding to the terminal device, and the information indicating the transmission of the target data. Alternatively, the first response message may include the IP address of the second network element, the network element ID of the second network element, and the information indicating the transmission of the target data.

As another example, the first response message for the third message may include all of the above information. For example, the first response message may include the IP address of the second network element, the network element ID of the second network element, the identifier of the PDU session corresponding to the second network element in the one or more PDU sessions corresponding to the terminal device, and the information indicating the transmission of the target data.

In some embodiments, in response to the third network element transmitting the first response message for the third message to the first network element, the first network element may subsequently transmit the first message to the corresponding second network element based on information carried in the first response message (e.g., the IP address of the second network element and/or the network element ID of the second network element), to request the second network element to transmit the target data.

That is, in some embodiments, in response to the third network element transmitting the first response message for the third message to the first network element, the method illustrated in FIG. 7 may further include step S740. In S740, the first network element transmits a first message to the second network element. The first message is used for requesting the second network element to transmit target data to the terminal device. The introduction of step S740 may be referred to the introduction of step S510 above.

In some embodiments, in a case where the third network element fails to determine the second network element for transmitting the target data, the third network element may transmit a second response message for the third message to the first network element.

In some embodiments, the second response message for the third message may be used for indicating that second network elements corresponding to one or more PDU sessions corresponding to the terminal device do not support the transmission of the target data, that is, the second response message may be used for indicating that there is no qualified second network element. Taking the second network element as the UPF as an example, the second response message may be used for indicating that UPFs corresponding to the one or more PDU sessions corresponding to the terminal device do not support the transmission of the target data.

In some embodiments, in response to the third network element transmitting a second response message for the third message to the first network element, that is, in response to the third network element determining that second network elements corresponding to one or more PDU sessions corresponding to the terminal device do not support the transmission of the target data, the first network element may request the terminal device to establish a PDU session capable of supporting the transmission of the target data.

As an implementation, after receiving the second response message for the third message from the third network element, the first network element may transmit first indication information to the terminal device. The first indication information may be used for indicating one or more pieces of the following information: second network elements (e.g., UPFs) corresponding to one or more PDU sessions corresponding to the terminal device not supporting the transmission of the target data, or the terminal device establishing a PDU session capable of supporting the transmission of the target data.

In some embodiments, after receiving the first indication information transmitted by the first network element, the terminal device may establish the PDU session capable of supporting the transmission of the target data.

The introduction of the first network element transmitting the first indication information to the terminal device and the terminal device establishing the PDU session supporting the transmission of the target data will be specifically introduced below in conjunction with embodiments, which will not be introduced in detail here.

In some embodiments, before determining, through the third network element, the second network element for transmitting the target data, the first network element needs to first determine the third network element, which will be introduced below in conjunction with FIG. 7.

In some embodiments, before step S720, the method illustrated in FIG. 7 may further include step S712. In step S712, the first network element transmits a fourth message to a fourth network element. The fourth message may be used for determining the third network element.

In some embodiments, the fourth message may be used for obtaining session-related subscription information of the terminal device, to enable the first network element to determine the third network element based on the session-related subscription information of the terminal device, so as to determine the second network element for transmitting the target data by requesting the third network element.

In some embodiments, the fourth message may carry an identifier of the terminal device, to enable the fourth network element to determine the session-related subscription information corresponding to the terminal device.

The fourth network element will not be specifically limited in the embodiments of the present disclosure, as long as the fourth network element is capable of storing or obtaining the session-related subscription information of the terminal device. Taking the NR system as an example, the fourth network element may be a UDM. However, the embodiments of the present disclosure are not limited to the above. The fourth network element may also be, for example, a network element, node or device in the future communication system capable of storing or obtaining the session-related subscription information of the terminal device.

In some embodiments, after step S712, the method may further include step S714. In step S714, the fourth network element transmits a response message for the fourth message to the first network element. The response message for the fourth message may include the session-related subscription information of the terminal device.

The session-related subscription information of the terminal device will not be limited in the embodiments of the present disclosure. Exemplarily, the session-related subscription information may include information related to a PDU session corresponding to the terminal device and/or relevant information of the determined third network element.

In some embodiments, the session-related subscription information may include one or more of the following: an identifier of the terminal device, identifiers of one or more PDU sessions corresponding to the terminal device, IP addresses of third network elements corresponding to one or more PDU sessions corresponding to the terminal device, network element identifiers of third network elements corresponding to one or more PDU sessions corresponding to the terminal device, or information indicating whether one or more PDU sessions support transmission of the target data.

In some embodiments, the identifiers of the one or more PDU sessions corresponding to the terminal device may be used for indicating PDU sessions supported by the terminal device, and the second network element may subsequently transmit the target data to the terminal device through one or more of the one or more PDU sessions.

In some embodiments, the IP addresses and/or the network element IDs of the third network elements corresponding to the one or more PDU sessions corresponding to the terminal device may be used by the first network element to determine the third network element(s), so that the first network element subsequently initiates request(s) to the third network element(s) to determine the second network element capable of transmitting the target data.

In some embodiments, the session-related subscription information may include information indicating whether the one or more PDU sessions support the transmission of the target data, so that the first network element determines whether the terminal device needs to establish a PDU session to transmit the target data. As an implementation, additional description information of the PDU session may be added to the session-related subscription information, so as to indicate whether the PDU session supports the transmission of the target data through the description information.

In some embodiments, the session-related subscription information may include part of the above information. For example, the session-related subscription information may include the identifier of the terminal device, the identifiers of the one or more PDU sessions corresponding to the terminal device, the IP addresses of the third network elements corresponding to the one or more PDU sessions corresponding to the terminal device, or the information indicating whether the one or more PDU sessions support the transmission of the target data.

In some embodiments, the session-related subscription information may include all of the above information.

In some embodiments, in response to the one or more PDU sessions corresponding to the terminal device supporting the transmission of the target data, for example, the session-related subscription information carried by the response message for the fourth message includes information indicating that the one or more PDU sessions support the transmission of the target data, the first network element may determine the third network element based on the response message for the fourth message, so as to subsequently transmit a request to the third network element to determine the second network element for transmitting the target data. For example, the first network element may transmit third message(s) to corresponding third network element(s) based on the IP addresses and/or the network element IDs of the third network elements corresponding to the one or more PDU sessions corresponding to the terminal device.

In some embodiments, in response to the one or more PDU sessions corresponding to the terminal device not supporting the transmission of the target data, for example, the session-related subscription information carried by the response message for the fourth message includes information indicating that the one or more PDU sessions do not supporting the transmission of the target data, the first network element may request the terminal device to establish a PDU session capable of supporting the transmission of the target data.

As an implementation, after receiving the response message for the fourth message from the fourth network element, the first network element may transmit second indication information to the terminal device. The second indication information may be used for indicating one or more of the following information: one or more PDU sessions corresponding to the terminal device not supporting the transmission of the target data, or the terminal device establishing a PDU session capable of supporting the transmission of the target data.

In some embodiments, after receiving the second indication information transmitted by the first network element, the terminal device may establish the PDU session capable of supporting the transmission of the target data.

The introduction of the first network element transmitting the second indication information to the terminal device and the terminal device establishing the PDU session to support the transmission of the target data will be specifically introduced below in conjunction with the embodiments, which will not be described in detail here.

It should be understood that the processes or steps of the wireless communication methods described above may be used in conjunction with each other. For example, the methods illustrated in FIG. 5, FIG. 6, and/or

FIG. 7 may be used in conjunction. As an example, the methods of FIG. 5 and FIG. 6 may be used in conjunction. As another example, the methods of FIG. 6 and FIG. 7 may be used in conjunction. As yet another example, the methods of FIG. 5, FIG. 6, and FIG. 7 may be used in conjunction, and the like.

For ease of understanding, taking the target data as the model data and the second network element as the UPF as an example, an example of a process of transmitting the model data of the present disclosure is provided below in conjunction with Embodiment 1. It should be understood that the embodiments are only for illustration and are not intended to limit the solutions of the embodiments of the present disclosure.

### Embodiment 1

In Embodiment 1, a first network element may subscribe to a service of a UPF (e.g., in an event subscription manner or in a function subscription manner), to transmit model data to a terminal device through the UPF on a user plane. For example, the model data is transmitted to the terminal device through the UPF on the user plane by using a PDU session.

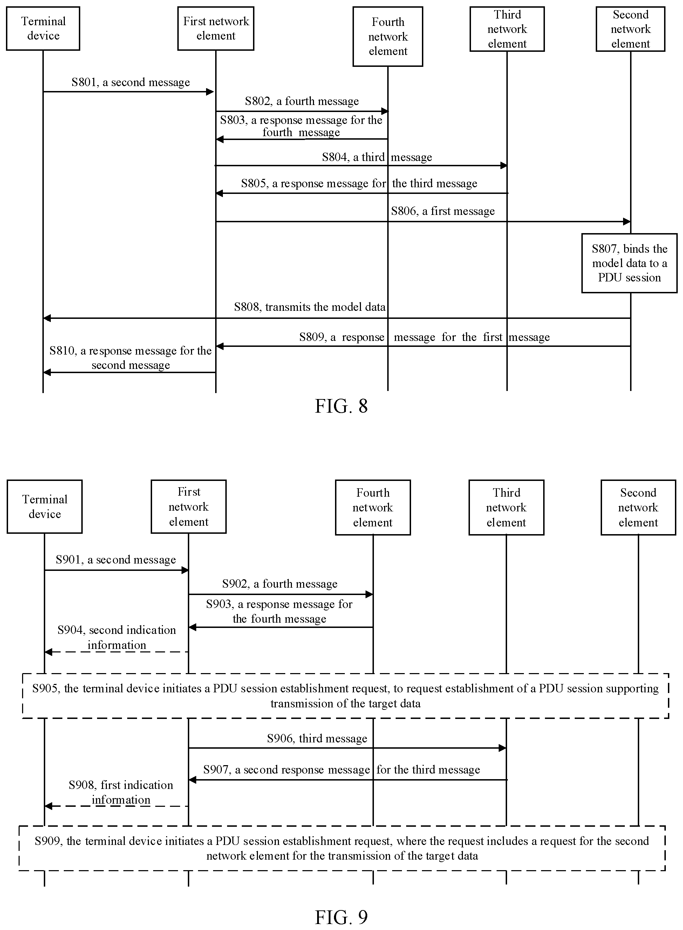

FIG. 8 is a schematic flowchart of a wireless communication method provided in still yet another embodiment of the present disclosure. As illustrated in FIG. 8, the method may include steps S801 to S810.

In step S801, the terminal device transmits a second message to the first network element. The second message is used for requesting transmission of the model data.

In some embodiments, in a case where the terminal device intends to perform an AI-based operation (e.g., CSI feedback, beam management, or AI-based positioning), the terminal device needs to apply for a model from the network. In this case, the terminal device may transmit the second message to the first network element to request the transmission of the model data.

In some embodiments, the second message may include a model ID, the model ID indicating a model that the terminal device intends to use. In some embodiments, the second message may further include an identifier of the terminal device.

In step S802, the first network element transmits a fourth message to a fourth network element. The fourth message is used for obtaining session-related subscription information of the terminal device.

In some embodiments, in order to transmit required model data to the terminal device through the UPF, the first network element needs to know which UPF is currently serving the terminal device. Therefore, the first network element may first interact with the fourth network element, to obtain the session-related subscription information of the terminal device.

In some embodiments, the fourth message may include the identifier of the terminal device.

In some embodiments, the fourth network element may search for the session-related subscription information of the terminal device corresponding to the identifier of the terminal device based on the identifier of the terminal device in the fourth message.

In step S803, the fourth network element transmits a response message for the fourth message to the first network element.

In some embodiments, the response message for the fourth message includes the session-related subscription information of the terminal device.

In some embodiments, the session-related subscription information of the terminal device may include an ID of a PDU session established by the terminal device, and an internet protocol (IP) address and/or a network element ID of a third network element corresponding to the PDU session. In some embodiments, additional description information of the PDU session may be added to the session-related subscription information, that is, information indicating whether the PDU session supports the transmission of the model data.

In step S804, in response to a PDU session supporting the transmission of the model data existing, the first network element transmits a third message to the third network element. The third message may be used for determining the UPF serving the terminal device.

In some embodiments, the first network element may transmit the third message to the third network element based on the IP address and/or the network element ID of the third network element obtained from the fourth network element, to request information of the UPF that is serving the terminal device (e.g., the address of the UPF).

In some embodiments, since the first network element intends to transmit the model data, the UPF information requested by the first network element may further include information indicating the transmission of the model data. For example, the UPF information requested by the first network element may further include indication information that the UPF is capable of supporting a service of the transmission of the model data. Based on this, in some embodiments, the third message may include indication information of the service of the transmission of the model data, the identifier of the terminal device, or identifiers of one or more PDU sessions corresponding to the terminal device.

In some embodiments, in response to a PDU session supporting of the transmission of the model data not existing, the first network element transmits second indication information to the terminal device, where the second indication information is used for indicating that the one or more PDU sessions corresponding to the terminal device do not support the transmission of the model data and/or indicate that the terminal device is to establish the PDU session capable of supporting the transmission of the model data.

In step S805, the third network element transmits a response message for the third message to the first network element.

In some embodiments, in response to the UPFs corresponding to the one or more PDU sessions corresponding to the terminal device supporting the transmission of the model data, the third network element may transmit a first response message for the third message to the first network element. The first response message may include one or more pieces of the following information: an IP address of the second network element, a network element ID of the second network element, an identifier of a PDU session corresponding to the second network element in the one or more PDU sessions corresponding to the terminal device, or the information indicating the transmission of the model data (e.g., indication information that the UPF is capable of supporting the service of the transmission of the model data ).

In some embodiments, in response to the UPFs corresponding to the one or more PDU sessions corresponding to the terminal device not supporting the transmission of the model data, the third network element may transmit a second response message for the third message to the first network element. The second response message may be used for indicating that the UPFs corresponding to the one or more PDU sessions corresponding to the terminal device not supporting the transmission of the model data.

In some embodiments, in response to the UPF capable of supporting the transmission of the model data not existing, the first network element may transmit first indication information to the terminal device, where the first indication information is used for indicating that the UPFs corresponding to the one or more PDU sessions corresponding to the terminal device do not support the transmission of the model data and/or indicate that the terminal device is to establish the PDU session capable of supporting the transmission of the model data.

In step S806, the first network element transmits a first message to the UPF. The first message may be used for requesting the UPF to transmit the model data to the terminal device. In other words, the first message may be used for subscribing to the model transmission service defined on the UPF side.

In some embodiments, the first network element may transmit the first message to the corresponding UPF based on the IP address and/or the network element ID of the UPF carried in the response message for the third message.

In some embodiments, in response to the first message being used for subscribing to the service in the event subscription manner, the first message may include an event ID associated with the transmission of the model data, an identifier of the terminal device, an identifier of the PDU session used for transmitting the model data, a model ID, or the model data.

In some embodiments, in response to the first message being used for subscribing to the service in the function subscription manner, the first message may include the identifier of the terminal device, the identifier of the PDU session used for transmitting the model data, the model ID, and the model data.

In step S807, the UPF binds the model data to a PDU session between the UPF and the terminal device.

In some embodiments, in response to multiple PDU sessions existing between the UPF and the terminal device, which PDU session to which the model data is bound will not be limited in the embodiments of the present disclosure.

In step S808, the UPF transmits the model data to the terminal device through the user plane.

In step S809, the UPF transmits a response message for the first message to the first network element. The response message for the first message may be used for indicating that the model data has been transmitted to the terminal device.

In some embodiments, the response message for the first message may include one or more pieces of the following information: an identifier of the terminal device, an event ID associated with the transmission of the model data, an identifier of a PDU session used for transmitting the model data, a model ID, or information indicating successful transmission of the model data.

In step S810, the first network element transmits a response message for the second message to the terminal device. The response message for the second message may include one or more pieces of the following information: a model ID, an identifier of the terminal device, or information indicating successful transmission of the model data.

As mentioned above, in response to the one or more PDU sessions corresponding to the terminal device not supporting the transmission of the target data and/or in response to the second network element (e.g., the UPF) corresponding to the one or more PDU sessions corresponding to the terminal device not supporting the transmission of the target data, the first network element may transmit indication information to the terminal device to indicate the terminal device to establish a PDU session capable of supporting the transmission of the target data, or indicate that the one or more PDU sessions do not support the transmission of the target data and/or the second network elements corresponding to the one or more PDU sessions do not support the transmission of the target data. The process of the first network element indicating the terminal device to establish the PDU session capable of supporting the transmission of the target data will be introduced below in conjunction with Embodiment 2.

### Embodiment 2

FIG. 9 is a schematic flowchart of a wireless communication method provided in still yet another embodiment of the present disclosure. The method illustrated in FIG. 9 may include steps S901 to S909.

In step S901, a terminal device transmits a second message to a first network element. The second message is used for requesting transmission of target data.

In step S902, the first network element transmits a fourth message to a fourth network element. The fourth message is used for obtaining session-related subscription information of the terminal device.

In step S903, the fourth network element transmits a response message for the fourth message to the first network element. The response message for the fourth message includes the session-related subscription information of the terminal device.

In some embodiments, in response to the session-related subscription information carried in the response message for the fourth message including information indicating whether the PDU session supports the transmission of the target data, the first network element may use the information to determine whether there is an existing PDU session capable of transmitting the target data to the terminal device.

In step S904, in response to the first network element determining that there is no existing PDU session capable of transmitting the target data to the terminal device, the first network element transmits second indication information to the terminal device.

The second indication information is used for indicating that one or more PDU sessions corresponding to the terminal device do not support the transmission of the target data and/or indicate that the terminal device is to establish a PDU session capable of supporting the transmission of the target data.

In step S905, the terminal device initiates a session establishment process based on the second indication information.

In some embodiments, the terminal device initiates the session establishment process in order to establish a PDU session capable of supporting the transmission of the target data.

In some embodiments, the session establishment process initiated by the terminal device may not request only the establishment of a PDU session capable of supporting the target data transmission, but may further request selection of a second network element capable of supporting the target data transmission.

In step S906, the first network element transmits a third message to a third network element. The third message is used for determining the second network element serving the terminal device.

In some embodiments, in response to no information indicating whether the PDU session supports the transmission of the target data existing in steps S902 and S903, steps S904 and S905 may be skipped.

In step S907, the third network element transmits a second response message for the third message to the first network element, where the second response message is used for indicating that second network elements corresponding to one or more PDU sessions corresponding to the terminal device do not support the transmission of the target data.

In step S908, the first network element transmits first indication information to the terminal device. The first indication information is used for indicating that the second network elements corresponding to the one or more PDU sessions corresponding to the terminal device do not support the transmission of the model data and/or indicate that the terminal device is to establish a PDU session capable of supporting the transmission of the model data.

In step S909, the terminal device initiates a session establishment process based on the first indication information.

In some embodiments, the terminal device initiates the session establishment process in order to establish the PDU session capable of supporting the transmission of the target data.

In some embodiments, the session establishment process initiated by the terminal device may not request only the establishment of the PDU session capable of supporting the transmission of the target data, but may further request the selection of the second network element capable of supporting the transmission of the target data.

In some embodiments, in response to the third network element transmitting a first response message for the third message to the first network element, steps S907 to S909 may be skipped.

It will be noted that the process of Embodiment 2 may ensure that the terminal device definitely has a PDU session capable of meeting the transmission of the target data and a second network element corresponding to the PDU session that supports the transmission of the target data. Therefore, after the process of Embodiment 2, the terminal device may retransmit the second message to the first network element to request transmission of the target data. The transmission of the second message by the terminal device to the first network element to request the transmission of the target data and the subsequent interaction process may be referred to the previous introduction (e.g., Embodiment 1).

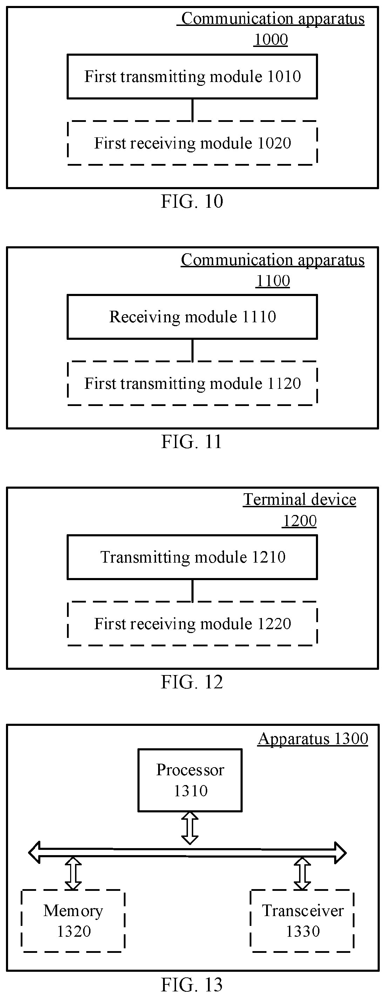

The method embodiments of the present disclosure are described in detail above in conjunction with FIG. 1 to FIG. 9, and apparatus embodiments of the present disclosure are described in detail below in conjunction with FIG. 10 to FIG. 13. It should be understood that the description of the method embodiments corresponds to the description of the apparatus embodiments, and therefore, for parts that are not described in detail may be referred to the above method embodiments.

FIG. 10 is a schematic structural diagram of a communication apparatus provided in an embodiment of the present disclosure. The communication apparatus illustrated in FIG. 10 may be any of the first network elements described above, such as the NWDAF. The communication apparatus 1000 illustrated in FIG. 10 may include a first transmitting module 1010.

The first transmitting module 1010 may be configured to transmit a first message to a second network element, where the first message is used for requesting the second network element to transmit target data generated by the first network element to a terminal device.

Optionally, the first message includes one or more pieces of the following information: an event identifier associated with transmission of the target data; an identifier of the terminal device; an identifier of a PDU session used for transmitting the target data; an identifier associated with the target data; or the target data.

Optionally, the second network element supports the first network element to transmit the target data in an event subscription manner; or the second network element supports the first network element to transmit the target data in a function subscription manner.

Optionally, in response to the second network element supporting the first network element to transmit the target data in the event subscription manner, the first message includes one or more of the following: an event identifier associated with transmission of the target data; an identifier of the terminal device; an identifier of a PDU session used for transmitting the target data; an identifier associated with the target data; or the target data.

Optionally, in response to the second network element supporting the first network element to transmit the target data in the function subscription manner, the first message includes one or more of the following: an identifier of the terminal device; an identifier of a PDU session used for transmitting the target data; an identifier associated with the target data; or the target data.

Optionally, the communication apparatus 1000 further includes: a first receiving module 1020, configured to receive a second message transmitted by the terminal device, where the second message is used for requesting transmission of the target data.

Optionally, the second message includes one or more of the following: an identifier associated with the target data; or an identifier of the terminal device.

Optionally, the apparatus further includes: a second transmitting module, configured to transmit a response message for the second message to the terminal device, where the response message for the second message includes one or more pieces of the following information: an identifier associated with the target data; an identifier of the terminal device; or information indicating successful transmission of the target data.

Optionally, the apparatus further includes: a third transmitting module, configured to transmit a third message to a third network element, where the third message is used for determining the second network element.

Optionally, the third message includes one or more pieces of the following information: an identifier of the terminal device; identifiers of one or more PDU sessions corresponding to the terminal device; or information indicating transmission of the target data.

Optionally, the apparatus further includes: a second receiving module, configured to receive a first response message for the third message from the third network element, where the first response message includes one or more pieces of the following information: an internet protocol (IP) address of the second network element; a network element identifier of the second network element; an identifier of a PDU session corresponding to the second network element in one or more PDU sessions corresponding to the terminal device; or information indicating of transmission of the target data.

Optionally, the apparatus further includes: a third receiving module, configured to receive a second response message for the third message from the third network element, where the second response message is used for indicating that UPFs corresponding to one or more PDU sessions corresponding to the terminal device do not support transmission of the target data.

Optionally, the apparatus further includes: a fourth transmitting module, configured to transmit a first indication information to the terminal device, where the first indication information is used for indicating one or more pieces of the following information: the UPFs corresponding to the one or more PDU sessions not supporting the transmission of the target data; or the terminal device establishing a PDU session capable of supporting the transmission of the target data.

Optionally, the apparatus further includes: a fifth transmitting module, configured to transmit a fourth message to a fourth network element, where the fourth message is used for obtaining session-related subscription information of the terminal device.

Optionally, the apparatus further includes: a fourth receiving module, configured to receive a response message for the fourth message from the fourth network element, where the response message for the fourth message includes the session-related subscription information.

Optionally, the session-related subscription information includes one or more of the following: an identifier of the terminal device; identifiers of one or more PDU sessions corresponding to the terminal device; IP addresses of third network elements corresponding to the one or more PDU sessions; network element identifiers of third network elements corresponding to one or more PDU sessions; or information indicating whether one or more PDU sessions support transmission of the target data.

Optionally, in response to the one or more PDU sessions not supporting the transmission of the target data, the apparatus further includes: a sixth transmitting module, configured to transmit second indication information to the terminal device, where the second indication information is used for indicating one or more of the following: the one or more PDU sessions not supporting the transmission of the target data; or the terminal device establishing a PDU session capable of supporting the transmission of the target data.

Optionally, the fourth network element is UDM.

Optionally, the third network element is an SMF.

Optionally, the apparatus further includes: a fifth receiving module, configured to receive a response message for the first message from the second network element, where the response message for the first message is used for indicating that the target data has been transmitted to the terminal device.

Optionally, the response message for the first message includes one or more pieces of the following information: an identifier of the terminal device; an event identifier associated with the transmission of the target data; an identifier of the PDU session used for transmitting the target data; an identifier associated with the target data; or information indicating successful transmission of the target data.

Optionally, the target data is model data associated with a model identifier.

Optionally, the second network element is a UPF.

Optionally, the first network element is an NWDAF, an LMF or a GMLC.

Optionally, the first transmitting module 1010 may be a transceiver 1330. The communication apparatus 1000 may further include a processor 1310 and a memory 1320, as specifically illustrated in FIG. 13.

FIG. 11 is a schematic structural diagram of a communication apparatus provided in another embodiment of the present disclosure. The communication apparatus illustrated in FIG. 11 may be any of the second network elements described above, such as the UPF. The communication apparatus 1100 illustrated in FIG. 11 may include a receiving module 1110.

The receiving module 1110 may be configured to receive a first message transmitted by a first network element, where the first message is used for requesting the second network element to transmit target data generated by the first network element to a terminal device.

Optionally, the first message includes one or more pieces of the following information: an event identifier associated with transmission of the target data; an identifier of the terminal device; an identifier of a PDU session used for transmitting the target data; an identifier associated with the target data; or the target data.

Optionally, the second network element supports the first network element to transmit the target data in an event subscription manner; or the second network element supports the first network element to transmit the target data in a function subscription manner.

Optionally, in response to the second network element supporting the first network element to transmit the target data in the event subscription manner, the first message includes one or more pieces of the following: an event identifier associated with transmission of the target data; an identifier of the terminal device; an identifier of a PDU session used for transmitting the target data; an identifier associated with the target data; or the target data.

Optionally, in response to the second network element supporting the first network element to transmit the target data in the function subscription manner, the first message includes one or more of the following: an identifier of the terminal device; an identifier of the PDU session used for transmitting the target data; an identifier associated with the target data; or the target data.

Optionally, the apparatus further includes: a first transmitting module 1120, configured to transmit the target data to the terminal device.

Optionally, the apparatus further includes: a second transmitting module, configured to transmit a response message for the first message to the first network element, where the response message for the first message is used for indicating that the target data has been transmitted to the terminal device.

Optionally, the response message for the first message includes one or more pieces of the following information: an identifier of the terminal device; an event identifier associated with transmission of the target data; an identifier of a PDU session used for transmitting the target data; an identifier associated with the target data; or information indicating successful transmission of the target data.

Optionally, the target data is model data associated with a model identifier.

Optionally, the second network element is a UPF.

Optionally, the first network element is an NWDAF, an LMF or a GMLC.

Optionally, the receiving module 1110 may be a transceiver 1330. The communication apparatus 1100 may further include a processor 1310 and a memory 1320, as specifically illustrated in FIG. 13.

FIG. 12 is a schematic diagram of the structure of a terminal device provided in embodiments of the present disclosure. The terminal device 1200 illustrated in FIG. 12 may include a transmitting module 1210.

The transmitting module 1210 may be configured to transmit a second message to a first network element, where the second message is used for requesting the first network element to transmit target data generated by the first network element.

Optionally, the second message includes one or more pieces of the following: an identifier associated with the target data; or an identifier of the terminal device.

Optionally, the terminal device further includes: a first receiving module 1220, configured to receive the target data transmitted by the second network element.

Optionally, the second network element supports the first network element to transmit the target data in an event subscription manner; or the second network element supports the first network element to transmit the target data in a function subscription manner.

Optionally, the second network element is a UPF.

Optionally, the terminal device further includes: a second receiving module, configured to receive a response message for the second message from the first network element after the target data is transmitted to the terminal device, where the response message for the second message includes one or more pieces of the following information: an identifier associated with the target data; an identifier of the terminal device; or information indicating successful transmission of the target data.

Optionally, the terminal device further includes: a third receiving module, configured to receive first indication information transmitted by the first network element, where the first indication information is used for indicating one or more pieces of the following information: UPFs corresponding to one or more PDU sessions corresponding to the terminal device not supporting transmission of the target data; or the terminal device establishing a PDU session capable of supporting transmission of the target data.

Optionally, the terminal device further includes: a fourth receiving module, configured to receive second indication information transmitted by the first network element, where the second indication information is used for indicating one or more of the following: one or more PDU sessions corresponding to the terminal device not supporting transmission of the target data; or the terminal device establishing a PDU session capable of supporting transmission of the target data.

Optionally, the target data is model data associated with a model identifier.

Optionally, the first network element is an NWDAF, an LMF or a GMLC.

Optionally, the transmitting module 1210 may be a transceiver 1330. The terminal device 1200 may further include a processor 1310 and a memory 1320, as specifically illustrated in FIG. 13.

FIG. 13 is a schematic structural diagram of a communication apparatus provided in embodiments of the present disclosure. Units or modules with dashed lines in FIG. 13 indicate that the units or modules are optional. The apparatus 1300 may be configured to implement the methods described in the above method embodiments. The apparatus 1300 may be a chip, a terminal device, or a network device.

The apparatus 1300 may include one or more processors 1310. The processor 1310 may support the apparatus 1300 to implement the methods described in the above method embodiments. The processor 1310 may be a general purpose processor or a special purpose processor. For example, the processor may be a central processing unit (CPU). Alternatively, the processor may be another general purpose processor, a digital signal processor (DSP), an application specific integrated circuits (ASIC), a field programmable gate array (FPGA) or another programmable logic device, a discrete gate or a transistor logic device, a discrete hardware component, or the like. The general purpose processor may be a microprocessor, or the processor may be any conventional processor or the like.

The apparatus 1300 may further include one or more memories 1320. The memory 1320 has stored thereon a program, and the program may be performed by the processor 1310, to enable the processor 1310 to perform the methods described in the above method embodiments. The memory 1320 may be independent of the processor 1310 or may be integrated into the processor 1310.

The apparatus 1300 may further include a transceiver 1330. The processor 1310 may communicate with other devices or chips via the transceiver 1330. For example, the processor 1310 may transmit data and receive data with other devices or chips via the transceiver 1330.

The embodiments of the present disclosure further provide a computer-readable storage medium for storing a program. The computer-readable storage medium may be applied in the terminal or the network device provided in the embodiments of the present disclosure, and the program enables a computer to perform the methods performed by the terminal or the network device in various embodiments of the present disclosure.

The embodiments of the present disclosure further provide a computer program product. The computer program product includes a program. The computer program product may be applied in the terminal or the network device provided in the embodiments of the present disclosure, and the program enables a computer to perform the methods performed by the terminal or the network device in various embodiments of the present disclosure.

The embodiments of the present disclosure further provide a computer program. The computer program may be applied in the terminal or the network device provided in the embodiments of the present disclosure, and the computer program enables a computer to perform the methods performed by the terminal or the network device in various embodiments of the present disclosure.

It should be understood that the terms "system" and "network" may be used interchangeably in the present disclosure. In addition, the terms used in the present disclosure are only used for explaining the specific embodiments of the present disclosure and are not intended to limit the present disclosure. The terms "first," "second," "third" and "fourth" in the specification, claims and drawings of the present disclosure are used for distinguishing different objects rather than for describing a specific order. In addition, the terms "include," "comprises," "has" and any variations thereof, are intended to cover a non-exclusive inclusion.

In the embodiments of the present disclosure, the "indicate" mentioned may mean a direct indication, an indirect indication, or an indication of an association relationship. For example, A indicates B, which may mean that A directly indicates B, for example, B may be obtained through A; or it may mean that A indirectly indicates B, for example, A indicates C, and B may be obtained through C; or it may mean that there is an association relationship between A and B.

In the embodiments of the present disclosure, "B corresponding to A" means that B is associated with A, and B may be determined based on A. However, it should further be understood that determining B based on A does not mean determining B based solely on A. B may also be determined based on A and/or other information.

In the embodiments of the present disclosure, the term "corresponding" may indicate a direct or indirect correspondence between the two, or an association relationship between the two, or a relationship between indicating and being indicated, configuring and being configured, or the like.

In the embodiments of the present disclosure, the word "include" mentioned may refer to direct inclusion or indirect inclusion. Optionally, "including" mentioned in the embodiments of the present disclosure may be replaced with "indicating" or "for determining". For example, A including B may be replaced by A indicating B, or A being used for determining B.

In the embodiments of the present disclosure, "pre-defined" or "pre-configured" may be implemented by pre-saving corresponding codes, tables or other methods capable of being used for indicating relevant information in a device (e.g., including a terminal device and a network device), its specific implementation will not be limited in the present disclosure. For example, pre-defined may refer to that defined in a protocol.

In the embodiments of the present disclosure, the "protocol" may refer to a standard protocol in the communications field, for example, it may include an LTE protocol, an NR protocol, and related protocols used in future communication systems, which will not be limited in the present disclosure.

In the embodiments of the present disclosure, the term "and/or" is only a description of an association relationship of associated objects, and indicates that there may be three kinds of relationships. For example, "A and/or B" may represent three cases: A exists alone, both A and B exist, and B exists alone. In addition, the character "/" herein generally indicates that the associated objects before and after this character are in an "or" relationship.

In various embodiments of the present disclosure, the magnitude of the serial numbers of the above processes does not indicate an execution order. The execution order of each process should be determined by its function and internal logic, and should not constitute any limitation on the implementation process of the embodiments of the present disclosure.

In several embodiments provided by the present disclosure, it should be understood that the disclosed system, apparatuses/device and methods may be implemented in other manners. For example, the apparatus/device embodiments described above are only schematic. For example, the division of the units is only a division of logical functions, and there may be other division manners in the actual implementation, such as a plurality of units or components may be combined or integrated into another system, or some features may be ignored or not implemented. In addition, the mutual coupling or direct coupling or communication connection shown or discussed may be indirect coupling or communication connection through some interfaces, apparatuses/devices, or units, which may be in electrical, mechanical or other forms.

The units described as separation components may or may not be physically separated, and the components illustrated as units may or may not be physical units, that is, they may be located at one place, or may be distributed onto a plurality of network units. Some or all of the units may be selected according to actual requirements to implement the purpose of the solution of the embodiments.

In addition, various functional units in various embodiments of the present disclosure may be integrated into one processing unit, or various units may exist physically alone, or two or more units may be integrated into one unit.

In the above embodiments, all or part of the above embodiments may be implemented by software, hardware, firmware or any combination thereof. When implemented using software, all or part of the above embodiments may be implemented in a form of a computer program product. The computer program product includes one or more computer instructions. When the computer program instructions are loaded and executed on a computer, the process or the function described in the embodiments of the present disclosure is generated in all or part. The computer may be a general purpose computer, a special purpose computer, a computer network, or another programmable apparatus. The computer instructions may be stored in a computer-readable storage medium, or transmitted from one computer-readable storage medium to another computer-readable storage medium. For example, the computer instructions may be transmitted from a website, computer, server, or data center to another website, computer, server, or data center through wired manner (e.g., coaxial cable, optical fiber, or digital subscriber line (DSL)) or wireless manner (e.g., infrared, radio, or microwave). The computer-readable storage medium may be any available medium that is capable of being read by the computer or a data storage device containing one or more available media integrated together, such as a server or a data center. The available medium may be a magnetic medium (e.g., a floppy disk, a hard disk, or a magnetic tape), an optical medium (e.g., a digital video disc (DVD)), or a semiconductor medium (e.g., a solid state disk (SSD)).

The foregoing descriptions are merely specific implementations of the present disclosure, but the protection scope of the present disclosure is not limited thereto. Any skilled person in the art could readily conceive of changes or replacements within the technical scope of the present disclosure, which shall be all included in the protection scope of the present disclosure. Therefore, the protection scope of the present application shall be subject to the protection scope of claims.

## Claims

1. A wireless communication method, comprising:
transmitting, by a first network element, a first message to a second network element, wherein the first message is used for requesting the second network element to transmit target data generated by the first network element to a terminal device.

2. The method according to claim 1, wherein the first message comprises one or more pieces of following information:
an event identifier associated with transmission of the target data;
an identifier of the terminal device;
an identifier of a packet data unit (PDU) session used for transmitting the target data;
an identifier associated with the target data; or
the target data.

3. The method according to claim 1 or 2, wherein the second network element supports the first network element to transmit the target data in an event subscription manner; or the second network element supports the first network element to transmit the target data in a function subscription manner.

4. The method according to claim 3, wherein in response to the second network element supporting the first network element to transmit the target data in the event subscription manner, the first message comprises one or more of following:
an event identifier associated with transmission of the target data;
an identifier of the terminal device;
an identifier of a PDU session used for transmitting the target data;
an identifier associated with the target data; or
the target data.

5. The method according to claim 3, wherein in response to the second network element supporting the first network element to transmit the target data in the function subscription manner, the first message comprises one or more of following:
an identifier of the terminal device;
an identifier of a PDU session used for transmitting the target data;
an identifier associated with the target data; or
the target data.

6. The method according to any one of claims 1 to 5, wherein before transmitting, by the first network element, the first message to the second network element, the method further comprises:
receiving, by the first network element, a second message transmitted by the terminal device, wherein the second message is used for requesting transmission of the target data.

7. The method according to claim 6, wherein the second message comprises one or more of following:
an identifier associated with the target data; or
an identifier of the terminal device.

8. The method according to claim 6 or 7, further comprising:
after the target data is transmitted to the terminal device, transmitting, by the first network element, a response message for the second message to the terminal device, wherein the response message for the second message comprises one or more pieces of following information:
an identifier associated with the target data;
an identifier of the terminal device; or
information indicating successful transmission of the target data.

9. The method according to any one of claims 1 to 8, wherein before transmitting, by the first network element, the first message to the second network element, the method further comprises:
transmitting, by the first network element, a third message to a third network element, wherein the third message is used for determining the second network element.

10. The method according to claim 9, wherein the third message comprises one or more pieces of following information:
an identifier of the terminal device;
identifiers of one or more PDU sessions corresponding to the terminal device; or
information indicating transmission of the target data.

11. The method according to claim 9 or 10, further comprising:
receiving, by the first network element, a first response message for the third message from the third network element, wherein the first response message comprises one or more pieces of following information:
an internet protocol (IP) address of the second network element;
a network element identifier of the second network element;
an identifier of a PDU session corresponding to the second network element in one or more PDU sessions corresponding to the terminal device; or
information indicating transmission of the target data.

12. The method according to claim 9 or 10, further comprising:
receiving, by the first network element, a second response message for the third message from the third network element, wherein the second response message is used for indicating that user plane functions (UPFs) corresponding to one or more PDU sessions corresponding to the terminal device do not support transmission of the target data.

13. The method according to claim 12, wherein after receiving, by the first network element, the second response message for the third message from the third network element, the method further comprises:
transmitting, by the first network element, first indication information to the terminal device, wherein the first indication information is used for indicating one or more pieces of following information:
the UPFs corresponding to the one or more PDU sessions not supporting the transmission of the target data; or
the terminal device establishing a PDU session capable of supporting the transmission of the target data.

14. The method according to any one of claims 9 to 13, wherein before transmitting, by the first network element, the third message to the third network element, the method further comprises:
transmitting, by the first network element, a fourth message to a fourth network element, wherein the fourth message is used for obtaining session-related subscription information of the terminal device.

15. The method according to claim 14, further comprising:
receiving, by the first network element, a response message for the fourth message from the fourth network element, wherein the response message for the fourth message comprises the session-related subscription information.

16. The method according to claim 14 or 15, wherein the session-related subscription information comprises one or more of following:
an identifier of the terminal device;
identifiers of one or more PDU sessions corresponding to the terminal device;
IP addresses of third network elements corresponding to one or more PDU sessions;
network element identifiers of third network elements corresponding to one or more PDU sessions; or
information indicating whether one or more PDU sessions support transmission of the target data.

17. The method according to claim 16, wherein in response to the one or more PDU sessions not supporting the transmission of the target data, the method further comprises:
transmitting, by the first network element, second indication information to the terminal device, wherein the second indication information is used for indicating one or more of following:
the one or more PDU sessions not supporting the transmission of the target data; or
the terminal device establishing a PDU session capable of supporting the transmission of the target data.

18. The method according to any one of claims 14 to 17, wherein the fourth network element is unified data management (UDM).

19. The method according to any one of claims 9 to 18, wherein the third network element is a session management function (SMF).

20. The method according to any one of claims 1 to 19, further comprising:
receiving, by the first network element, a response message for the first message from the second network element, wherein the response message for the first message is used for indicating that the target data has been transmitted to the terminal device.

21. The method according to claim 20, wherein the response message for the first message comprises one or more pieces of following information:
an identifier of the terminal device;
an event identifier associated with transmission of the target data;
an identifier of a PDU session used for transmitting the target data;
an identifier associated with the target data; or
information indicating successful transmission of the target data.

22. The method according to any one of claims 1 to 21, wherein the target data is model data associated with a model identifier.

23. The method according to any one of claims 1 to 22, wherein the second network element is a UPF.

24. The method according to any one of claims 1 to 23, wherein the first network element is a network data analytics function (NWDAF), a location management function (LMF) or a gateway mobile location center (GMLC).

25. A wireless communication method, comprising:
receiving, by a second network element, a first message transmitted by a first network element, wherein the first message is used for requesting the second network element to transmit target data generated by the first network element to a terminal device.

26. The method according to claim 25, wherein the first message comprises one or more pieces of following information:
an event identifier associated with transmission of the target data;
an identifier of the terminal device;
an identifier of a packet data unit (PDU) session used for transmitting the target data;
an identifier associated with the target data; or
the target data.

27. The method according to claim 25 or 26, wherein the second network element supports the first network element to transmit the target data in an event subscription manner; or the second network element supports the first network element to transmit the target data in a function subscription manner.

28. The method according to claim 27, wherein in response to the second network element supporting the first network element to transmit the target data in the event subscription manner, the first message comprises one or more of following:
an event identifier associated with transmission of the target data;
an identifier of the terminal device;
an identifier of a PDU session used for transmitting the target data;
an identifier associated with the target data; or
the target data.

29. The method according to claim 27, wherein in response to the second network element supporting the first network element to transmit the target data in the function subscription manner, the first message comprises one or more of following:
an identifier of the terminal device;
an identifier of a PDU session used for transmitting the target data;
an identifier associated with the target data; or
the target data.

30. The method according to any one of claims 25 to 29, further comprising:
transmitting, by the second network element, the target data to the terminal device.

31. The method according to any one of claims 25 to 30, further comprising:
transmitting, by the second network element, a response message for the first message to the first network element, wherein the response message for the first message is used for indicating that the target data has been transmitted to the terminal device.

32. The method according to claim 31, wherein the response message for the first message comprises one or more pieces of following information:
an identifier of the terminal device;
an event identifier associated with transmission of the target data;
an identifier of a PDU session used for transmitting the target data;
an identifier associated with the target data; or
information indicating successful transmission of the target data.

33. The method according to any one of claims 25 to 32, wherein the target data is model data associated with a model identifier.

34. The method according to any one of claims 25 to 33, wherein the second network element is a user plane function (UPF).

35. The method according to any one of claims 25 to 34, wherein the first network element is a network data analytics function (NWDAF), a location management function (LMF) or a gateway mobile location center (GMLC).

36. A wireless communication method, comprising:
transmitting, by a terminal device, a second message to a first network element, wherein the second message is used for requesting the first network element to transmit target data generated by the first network element.

37. The method according to claim 36, wherein the second message comprises one or more of following:
an identifier associated with the target data; or
an identifier of the terminal device.

38. The method according to claim 36 or 37, further comprising:
receiving, by the terminal device, the target data transmitted by a second network element.

39. The method according to claim 38, wherein the second network element supports the first network element to transmit the target data in an event subscription manner; or the second network element supports the first network element to transmit the target data in a function subscription manner.

40. The method according to claim 38 or 39, wherein the second network element is a user plane function (UPF).

41. The method according to any one of claims 36 to 40, further comprising:
after the target data is transmitted to the terminal device, receiving, by the terminal device, a response message for the second message from the first network element, wherein the response message for the second message comprises one or more pieces of following information:
an identifier associated with the target data;
an identifier of the terminal device; or
information indicating successful transmission of the target data.

42. The method according to claim 36 or 37, further comprising:
receiving, by the terminal device, first indication information transmitted by the first network element, wherein the first indication information is used for indicating one or more pieces of following information:
UPFs corresponding to one or more packet data unit (PDU) sessions corresponding to the terminal device not supporting transmission of the target data; or
the terminal device establishing a PDU session capable of supporting transmission of the target data.

43. The method according to claim 36 or 37, further comprising:
receiving, by the terminal device, second indication information transmitted by the first network element, wherein the second indication information is used for indicating one or more of following:
one or more PDU sessions corresponding to the terminal device not supporting transmission of the target data; or
the terminal device establishing a PDU session capable of supporting transmission of the target data.

44. The method according to any one of claims 36 to 43, wherein the target data is model data associated with a model identifier.

45. The method according to any one of claims 36 to 44, wherein the first network element is a network data analytics function (NWDAF), a location management function (LMF) or a gateway mobile location center (GMLC).

46. A communication apparatus, wherein the apparatus is a first network element and the apparatus comprises:
a first transmitting module, configured to transmit a first message to a second network element, wherein the first message is used for requesting the second network element to transmit target data generated by the first network element to a terminal device.

47. The apparatus according to claim 46, wherein the first message comprises one or more pieces of following information:
an event identifier associated with transmission of the target data;
an identifier of the terminal device;
an identifier of a packet data unit (PDU) session used for transmitting the target data;
an identifier associated with the target data; or
the target data.

48. The apparatus according to claim 46 or 47, wherein the second network element supports the first network element to transmit the target data in an event subscription manner; or the second network element supports the first network element to transmit the target data in a function subscription manner.

49. The apparatus according to claim 48, wherein in response to the second network element supporting the first network element to transmit the target data in the event subscription manner, the first message comprises one or more of following:
an event identifier associated with transmission of the target data;
an identifier of the terminal device;
an identifier of a PDU session used for transmitting the target data;
an identifier associated with the target data; or
the target data.

50. The apparatus according to claim 48, wherein in response to the second network element supporting the first network element to transmit the target data in the function subscription manner, the first message comprises one or more of following:
an identifier of the terminal device;
an identifier of a PDU session used for transmitting the target data;
an identifier associated with the target data; or
the target data.

51. The apparatus according to any one of claims 46 to 50, further comprising:
a first receiving module, configured to receive a second message transmitted by the terminal device, wherein the second message is used for requesting transmission of the target data.

52. The apparatus according to claim 51, wherein the second message comprises one or more of following:
an identifier associated with the target data; or
an identifier of the terminal device.

53. The apparatus according to claim 51 or 52, further comprising:
a second transmitting module, configured to transmit a response message for the second message to the terminal device, wherein the response message for the second message comprises one or more pieces of following information:
an identifier associated with the target data;
an identifier of the terminal device; or
information indicating successful transmission of the target data.

54. The apparatus according to any one of claims 46 to 53, further comprising:
a third transmitting module, configured to transmit a third message to a third network element, wherein the third message is used for determining the second network element.

55. The apparatus according to claim 54, wherein the third message comprises one or more pieces of following information:
an identifier of the terminal device;
identifiers of one or more PDU sessions corresponding to the terminal device; or
information indicating transmission of the target data.

56. The apparatus according to claim 54 or 55, further comprising:
a second receiving module, configured to receive a first response message for the third message from the third network element, wherein the first response message comprises one or more pieces of following information:
an internet protocol (IP) address of the second network element;
a network element identifier of the second network element;
an identifier of a PDU session corresponding to the second network element in one or more PDU sessions corresponding to the terminal device; or
information indicating transmission of the target data.

57. The apparatus according to claim 54 or 55, further comprising:
a third receiving module, configured to receive a second response message for the third message from the third network element, wherein the second response message is used for indicating that user plane functions (UPFs) corresponding to one or more PDU sessions corresponding to the terminal device do not support transmission of the target data.

58. The apparatus according to claim 57, further comprising:
a fourth transmitting module, configured to transmit first indication information to the terminal device, wherein the first indication information is used for indicating one or more pieces of following information:
the UPFs corresponding to the one or more PDU sessions not supporting the transmission of the target data; or
the terminal device establishing a PDU session capable of supporting the transmission of the target data.

59. The apparatus according to any one of claims 54 to 58, further comprising:
a fifth transmitting module, configured to transmit a fourth message to a fourth network element, wherein the fourth message is used for obtaining session-related subscription information of the terminal device.

60. The apparatus according to claim 59, further comprising:
a fourth receiving module, configured to receive a response message for the fourth message from the fourth network element, wherein the response message for the fourth message comprises the session-related subscription information.

61. The apparatus according to claim 59 or 60, wherein the session-related subscription information comprises one or more of following:
an identifier of the terminal device;
identifiers of one or more PDU sessions corresponding to the terminal device;
IP addresses of third network elements corresponding to one or more PDU sessions;
network element identifiers of third network elements corresponding to one or more PDU sessions; or
information indicating whether one or more PDU sessions support transmission of the target data.

62. The apparatus according to claim 61, wherein in response to the one or more PDU sessions not supporting the transmission of the target data, the apparatus further comprises:
a sixth transmitting module, configured to transmit second indication information to the terminal device, wherein the second indication information is used for indicating one or more of following:
the one or more PDU sessions not supporting the target data transmission; or
the terminal device establishing a PDU session capable of supporting the transmission of the target data.

63. The apparatus according to any one of claims 59 to 62, wherein the fourth network element is unified data management (UDM).

64. The device according to any one of claims 54 to 63, wherein the third network element is a session management function (SMF).

65. The device according to any one of claims 46 to 64, further comprising:
a fifth receiving module, configured to receive a response message for the first message from the second network element, wherein the response message for the first message is used for indicating that the target data has been transmitted to the terminal device.

66. The apparatus according to claim 65, wherein the response message for the first message comprises one or more pieces of following information:
an identifier of the terminal device;
an event identifier associated with the transmission of the target data;
an identifier of a PDU session used for transmitting the target data;
an identifier associated with the target data; or
information indicating successful transmission of the target data.

67. The apparatus according to any one of claims 46 to 66, wherein the target data is model data associated with a model identifier.

68. The apparatus according to any one of claims 46 to 67, wherein the second network element is a UPF.

69. The apparatus according to any one of claims 46 to 68, wherein the first network element is a network data analytics function (NWDAF), a location management function (LMF) or a gateway mobile location center (GMLC).

70. A communication apparatus, wherein the apparatus is a second network element and the apparatus comprises:
a receiving module, configured to receive a first message transmitted by a first network element, wherein the first message is used for requesting the second network element to transmit target data generated by the first network element to a terminal device.

71. The apparatus according to claim 70, wherein the first message comprises one or more pieces of following information:
an event identifier associated with the transmission of the target data;
an identifier of the terminal device;
an identifier of a packet data unit (PDU) session used for transmitting the target data;
an identifier associated with the target data; or
the target data.

72. The apparatus according to claim 70 or 71, wherein the second network element supports the first network element to transmit the target data in an event subscription manner; or the second network element supports the first network element to transmit the target data in a function subscription manner.

73. The apparatus according to claim 72, wherein in response to the second network element supporting the first network element to transmit the target data in the event subscription manner, the first message comprises one or more of following:
an event identifier associated with transmission of the target data;
an identifier of the terminal device;
an identifier of a PDU session used for transmitting the target data;
an identifier associated with the target data; or
the target data.

74. The apparatus according to claim 72, wherein in response to the second network element supporting the first network element to transmit the target data in the function subscription manner, the first message comprises one or more of following:
an identifier of the terminal device;
an identifier of a PDU session used for transmitting the target data;
an identifier associated with the target data; or
the target data.

75. The apparatus according to any one of claims 70 to 74, further comprising:
a first transmitting module, configured to transmit the target data to the terminal device.

76. The apparatus according to any one of claims 70 to 75, further comprising:
a second transmitting module, configured to transmit a response message for the first message to the first network element, wherein the response message for the first message is used for indicating that the target data has been transmitted to the terminal device.

77. The apparatus according to claim 76, wherein the response message for the first message comprises one or more pieces of following information:
an identifier of the terminal device;
an event identifier associated with transmission of the target data;
an identifier of a PDU session used for transmitting the target data;
an identifier associated with the target data; or
information indicating successful transmission of the target data.

78. The apparatus according to any one of claims 70 to 77, wherein the target data is model data associated with a model identifier.

79. The apparatus according to any one of claims 70 to 78, wherein the second network element is a user plane function (UPF).

80. The apparatus according to any one of claims 70 to 79, wherein the first network element is a network data analytics function (NWDAF), a location management function (LMF) or a gateway mobile location center (GMLC).

81. A terminal device, comprising:
a transmitting module, configured to transmit a second message to a first network element, wherein the second message is used for requesting the first network element to transmit target data generated by the first network element.

82. The terminal device according to claim 81, wherein the second message comprises one or more of following:
an identifier associated with the target data; or
an identifier of the terminal device.

83. The terminal device according to claim 81 or 82, further comprising:
a first receiving module, configured to receive the target data transmitted by a second network element.

84. The terminal device according to claim 83, wherein the second network element supports the first network element to transmit the target data in an event subscription manner; or the second network element supports the first network element to transmit the target data in a function subscription manner.

85. The terminal device according to claim 83 or 84, wherein the second network element is a user plane function (UPF).

86. The terminal device according to any one of claims 81 to 85, further comprising:
a second receiving module, configured to receive a response message for the second message from the first network element after the target data is transmitted to the terminal device, wherein the response message for the second message comprises one or more pieces of following information:
an identifier associated with the target data;
an identifier of the terminal device; or
information indicating successful transmission of the target data.

87. The terminal device according to claim 81 or 82, further comprising:
a third receiving module, configured to receive first indication information transmitted by the first network element, wherein the first indication information is used for indicating one or more pieces of following information:
UPFs corresponding to one or more packet data unit (PDU) sessions corresponding to the terminal device not supporting the transmission of the target data; or
the terminal device establishing a PDU session capable of supporting transmission of the target data.

88. The terminal device according to claim 81 or 82, further comprising:
a fourth receiving module, configured to receive second indication information transmitted by the first network element, wherein the second indication information is used for indicating one or more of following:
one or more PDU sessions corresponding to the terminal device not supporting transmission of the target data; or
the terminal device establishing a PDU session capable of supporting transmission of the target data.

89. The terminal device according to any one of claims 81 to 88, wherein the target data is model data associated with a model identifier.

90. The terminal device according to any one of claims 81 to 89, wherein the first network element is a network data analytics function (NWDAF), a location management function (LMF) or a gateway mobile location center (GMLC).

91. A communication apparatus, comprising a transceiver, a memory and a processor, wherein the memory is configured to store a program, and the processor is configured to call the program in the memory, to enable the communication apparatus to perform the method according to any one of claims 1 to 24, and 25 to 35.

92. A terminal device, comprising a transceiver, a memory and a processor, wherein the memory is configured to store a program, and the processor is configured to call the program in the memory, to enable the terminal device to perform the method according to any one of claims 36 to 45.

93. A apparatus, comprising a processor, configured to call a program from a memory, to enable the apparatus to perform the method according to any one of claims 1 to 45.

94. A chip, comprising a processor, configured to call a program from a memory, to enable a device equipped with the chip to perform the method according to any one of claims 1 to 45.

95. A computer-readable storage medium, having stored thereon a program, wherein the program enables a computer to perform the method according to any one of claims 1 to 45.

96. A computer program product, comprising a program, wherein the program enables a computer to perform the method according to any one of claims 1 to 45.

97. A computer program, wherein the computer program enables a computer to perform the method according to any one of claims 1 to 45.
